# EUROPEAN PATENT APPLICATION

(11) **EP 4 628 460 A1**
(43) Date of publication of application: **08.10.2025**
(21) Application number: 24168821.7
(22) Date of filing: 05.04.2024
(51) Int. Cl.: C03C 17/00, B23K 26/00, C03C 23/00, G03F 7/00

(54) **A PRODUCTION UNIT FOR FABRICATING ELECTROMAGNETICALLY FUNCTIONAL MARKINGS ON TRANSPARENT ARTICLES**

(71) Applicant: Stealthcase OY, 33841 Tampere (FI)
(72) Inventor: Lilja, Juha, 33841 Tampere (FI)
(74) Representative: Berggren Oy

(57) **Abstract**

The present invention relates to a a production unit 150 for fabricating electromagnetically functional markings 360 on transparent articles 201, comprising at least one laser device 170 configured to emit a laser beam at a wavelength to which the transparent articles 201 are transparent, and a computerized production control system 101, configured for mapping layered products 350 on transparent articles 201, wherein said system 101 is configured for nesting the layers of a layered product 350 on a transparent article 201, **characterized in that,** the system 101 comprises a product database 410 configured to be interfaced with a control unit 450 and configured, by programmed operations of the control unit 450, for storing and retrieving layers 351 comprising paired entries of digital traces 361, digital surfaces 362, beam parameter sets 380; and a program code 412, operated by said control unit 450, and is programmed to: select the layers 351 to be nested on a surface of a transparent article 201 for fabricating a coating 210 comprising a layered product 350 with said at least one laser device 170, and nest said layers 351 within constrained nesting regions 478, and perform variable selection of members of a set 352 of said layers 351 within said nesting regions 478 as a function of coordinate inputs 480, wherein said coordinate inputs 480 are scaled by said program code 412 in at least one dimension on the basis of said nesting.

## Description

### Technical Field

The present invention relates to a production unit for fabricating electromagnetically functional markings on transparent articles.

More specifically, the present invention relates to a production unit for fabricating electromagnetically functional markings on transparent articles, comprising at least one laser device configured to emit a laser beam at a wavelength to which the transparent articles are transparent, and a computerized production control system, configured for mapping layered products on transparent articles, wherein said system is configured for nesting the layers of a layered product on a transparent article.

### Background Information

The current state-of-the-art in laser processing of transparent articles involves a pre-defined, dimensionally static ablation pattern transferred to a coating of the article during processing. However, this approach is limited by the necessary overlap required by adjacent markings on the coating, restricting the laser unit to a limited distance defined by the actual pattern design. This limits the processing of articles with varying dimensions and requires manual adjustments for both the target pattern alignment and definition of the fully produced geometry.

Functional markings according to the present invention on transparent articles may address various technical purposes. To name a few, markings on transparent coatings on glass articles may be adapted for specific electrical function, and markings on transparent conductors such as thermally effective coatings on glass or carbon nanotube films may be formed to generate high-frequency potential nodes separated by said markings in an aim to form antennas, frequency-selective elements, and the like. Furthermore, spatially positioned filtering elements for electromagnetic energy, such as for visible light, ultraviolet (UV) light or infrared (IR) light, may be formed to serve a special function based on the heterogeneous filtering aspects. As a practical example, laser induced surface modulation of the surfaces of building glasses may be used to cause discontinuities in wave reflections such that bird-safety visuals are embedded into glasses that comprise high-frequency transparent conductive coatings. In another example, microwave functionalities may be formed on transparent conductive layers with laser-induced surface treatment by marking pre-configured patterns to cut openings on said coatings without harming the underlying substrate. In yet another example, plasma transfer may be used to transfer material from a slave surface to one of the surfaces of a transparent article in an aim to form a surface on the transparent article.

Document US10384308B2 presents a method for producing a grid pattern on a coated glass with laser. The document presents the typical approach, wherein a pre-defined and dimensionally static ablation pattern is transferred to the coating of the glass that is being processed. The method is inherently limited by the necessary overlap that is needed by the adjacent markings that are processed on the coating. This means that a laser unit that is used for processing, can only be displaced by a limited distance that is defined by the actual pattern design. Similarly, Document EP2640549B1 addresses the same principle, wherein the displacement of the laser during processing is limited by the dimension of the undulating pattern design, and the overlap of the patterns is required for the design to behave as intended. These approaches require complicated dimensioning of the process control, and are limited for the processing of articles of constant dimensions and require manual adjustments for both the target pattern alignment and definitions of the fully produced geometry.

The patent literature reveals a few attempts to make glass surfaces visible to birds, such as by applying ultraviolet (UV) reflecting coatings in a patterned manner. However, these attempts have limitations that prevent them from achieving optimal bird safety while maintaining the aesthetic and functional qualities of the glass. For instance, while some methods of applying UV coatings can achieve satisfactory reflectance, they may fail to account for the fact that birds may detect not only UV light but also visible light. Moreover, some methods may require the removal of entire layers of the coating, making the glass less thermally effective and potentially compromising its durability.

The typical approach involves creating a pre-defined and dimensionally static pattern, which is then transferred to the glass coating. This approach requires complicated dimensioning of the process control, and is limited for the processing of articles of constant dimensions, requiring manual adjustments for both the target pattern alignment and definitions of the fully produced geometry.

### Brief summary

To address these limitations, the present disclosure introduces an advanced solution for producing transparent articles with functional markings that removes the restrictions of the current methods and improves the state-of-the-art. The disclosed method provides a scalable solution for producing functional markings on transparent articles with varying dimensions through the use of a computerized production control system and automated nesting of layers on transparent articles. The system provides means for selecting layered products to be fabricated on transparent articles, a product database for storing and retrieving digital traces, digital surfaces, and beam parameter sets, and a user interface for assigning nesting regions to the transparent article.

In contrast to the current methods, the disclosed method provides a scalable approach for producing functional markings on transparent articles without the need for manual adjustments in positioning and dimensioning of the pattern. The system provides means for scaling the layered product on the coating of the article, and the coordinate inputs are scaled on the basis of geometrical inputs of the article for positioning of the laser device for fabricating the functional markings. This allows for the production of functional products in flexible mass production with varying glass dimensions, while also predicting the microwave power that can be delivered through the glass coating with the method. The disclosed method also allows for the creation of functional markings for various electromagnetic purposes by using the outcomes of the digital traces.

The present disclosure offers a novel method of treating glass surfaces to achieve bird-friendly visibility while preserving the integrity and performance of the glass. The method involves laser coloring treatment, which allows for surface scribing to modulate light wave reflection and transmission properties of the coating, resulting in at least UV- and/or visible light wave anomalies that are observable by birds. The laser scribing method can create various hatching patterns, allowing for efficient marking of the glass without the need to remove entire coating layers.

The current disclosure presents an advanced solution for producing transparent articles with functional and bird-friendly markings, wherein the above limitations are removed, and the state-of-the-art is improved. The fabrication process involves mapping a layered product onto the transparent article in a manner that is arranged for fabricating transparent articles of different sizes with selectable variation of the scaling factors of said product. The at least one laser device of the production unit is configured to control the movement of the displacement unit, and the displacement may be configured to be scaled by means of a computerized control program provided by the computerized production control system.

In an embodiment of the disclosure, coordinate inputs comprise waypoints for the at least one laser device, and the numerical displacement between said waypoints may be provided by the system for the displacement unit. The production unit is further configured to provide automated nesting of the layers of a layered product on transparent articles of different sizes. The layers are configured to be nested on the coating of said article as a layered product and to be programmatically routed on the basis of geometrical inputs of said article to fabricate said product on said coating.

Furthermore, the present disclosure offers the advantage of simultaneously producing microwave-functional markings and bird-friendly markings with the same nesting and laser device routing, saving production time. The layered product includes a digital surface that is advantageously treated by laser coloring to modulate the reflection and transmission properties of the coating in a manner that is observable by birds. By incorporating bird-friendly markings into the same production process as microwave-functional markings, the present disclosure provides a more efficient and cost-effective method for producing coated glass products that are safe for birds.

In one embodiment, the surface modulation may be formed on the underlying face of the glass coating, which allows the outermost layers to remain intact. This method comprises treating the coating from the glass side such that the visible area is formed on the coating, but the modulation is formed on the underlying face of the coating. This approach ensures that the conductive layers are not damaged or affected by the laser treatment, thus improving the longevity of the bird-friendly markings. The fabrication of microwave-functional markings and their scalable production in a combined process of inclusion of bird-friendly markings provides an added benefit for the production of coated glass products that are safe for birds.

The fabrication process further comprises means for selecting nesting regions to be assigned within an area delimited with the geometrical inputs of a transparent article to be processed with the production unit, and means for selecting the layered product to be fabricated on a transparent article, comprising means for selecting nesting regions to be assigned within an area delimited with said geometrical inputs, wherein said nesting regions are configured to be selected on the basis of digital widgets, and said nesting regions are configured to be filled with members of said set of said layers by said system, and said coordinate inputs are scaled in two dimensions on the basis of the filling of said nesting regions.

The present disclosure allows for the simultaneous fabrication of microwave-functional and bird-friendly markings with the same nesting and laser device routing, thereby saving significant production time and reducing manual adjustments required for pattern alignment and geometry definitions. Additionally, the disclosed fabrication process enables the creation of bird-friendly coatings on articles of varying sizes, further expanding the application of the invention.

The present disclosure offers an innovative solution for the efficient and simultaneous production of a series of microwave-functional markings on treatable glasses. By using a scalable process, this invention allows for the pre-configuration of a production queue that includes glasses with different nesting areas and functionalities. These nesting areas and functionalities are designed to offer varying microwave band coverage and scattering performance. This approach allows for a more tailored production process that meets the unique needs of different end-users while maximizing production efficiency. Additionally, this process enables the production of bird-friendly markings on the same glass surface, providing an added benefit for coated glass products that prioritize bird safety.

The current disclosure presents an advanced solution for producing transparent articles with functional markings wherein the limitations of the prior art are removed, and the stage-of-the-art is improved.

The present invention enhances the state of the art in fabricating electromagnetically functional markings on transparent articles 201, such as glasses with electrically conductive layers, and transparent coatings infused with carbon nanotube fillers. The disclosure presents a novel production unit 150, control unit 450, and a laser device 170 that emits laser energy at specific wavelength for which the articles 201 are transparent. The invention comprises a sophisticated computerized production control system 101 for mapping and automated nesting of layered products 350 on the articles 201. The disclosure comprises a product database 410 interfaced with the control unit 450, facilitating the storage and retrieval of digital traces 361, digital surfaces 362, and beam parameter sets 380 for pairing said retrievals for precise nesting within specified regions and scalable adjustments to fit varying article sizes.

The present invention surpasses existing methods by allowing for the scalable production of transparent articles with varying dimensions, including the fabrication of antennas or RF components directly on the coatings. Additionally, it introduces a method for plasma welding to grow opaque or translucent materials on the surfaces of transparent articles for making variable UV reflectivity regions on the articles to provide bird-safety visuals to prevent bird collision into glass installations. The invention not only facilitates the creation of electromagnetic functionalities like UV and visible light filters of bird-safety visuals but also microwave components such as antennas or frequency selective surfaces in a manner that is adaptable to articles of different sizes and geometries, eliminating the need for manual pattern alignment or adjustments.

To put it more precisely, the system is characterized in that the system comprises a product database configured to be interfaced with a control unit and configured, by programmed operations of the control unit, for storing and retrieving layers comprising paired entries of digital traces, digital surfaces, beam parameter sets; and a program code, which when operated by said control unit, causes the system to: select the layers to be nested on a surface of a transparent article for fabricating a coating comprising a layered product with said at least one laser device; nest said layers within constrained nesting regions; and perform variable selection of members of a set of said layers within said nesting regions as a function of coordinate inputs, wherein said coordinate inputs are scaled by said program code in at least one dimension on the basis of said nesting.

### Description of the drawings

In the following, the present invention will be described in more detail with reference to the appended drawings, in which
- Figures 1a and 1b: present a process for providing a transparent article with functional markings on a coating of the article,
- Figure 2: presents a production unit for fabricating functional markings on transparent articles, comprising a computerized production control system,
- Figures 3a and 3b: present a process for providing the transparent article with nesting regions and means for selecting the nesting regions to be assigned scalable coordinate inputs,
- Figures 4a - 4c: present various examples of scalable layers,
- Figure 5: presents an example of a layered product,
- Figures 6a and 6b: present an example of a process for providing transparent articles according to the present disclosure,
- Figure 7: presents various examples of transparent articles marked with layered products of the that are fabricated by the disclosed process,
- Figure 8: presents examples of a digital surface that is arranged to create visually obtrusive graphics for birds by modulating the reflection of sunlight with heterogeneous diffraction gratings.

### Detailed description

In the specification multiple examples of the present disclosure will be provided. It is set forth that any combination of the following examples falls within the scope of the present invention, even when not explicitly combined in the section where the embodiment is disclosed.

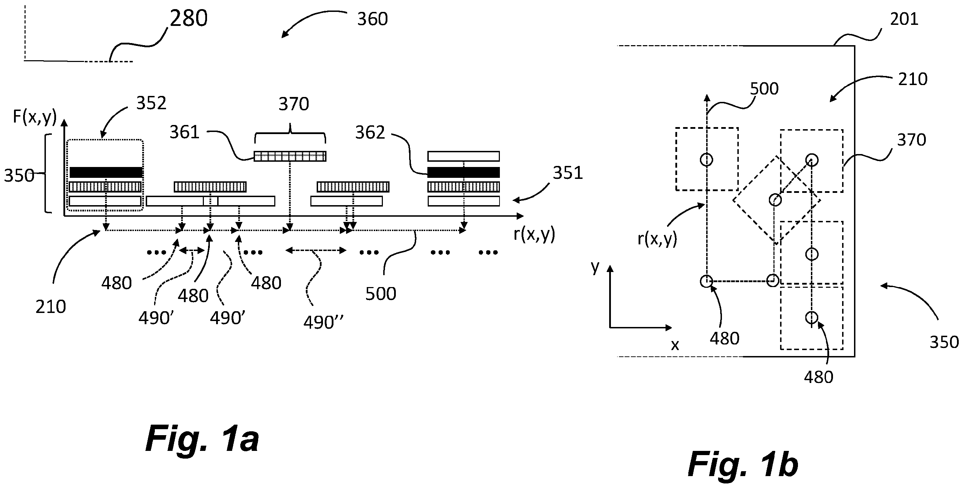

Figures 1a and 1b present various advantageous embodiments of the present disclosure. In the example of Figure 1a, there is presented a process for providing a transparent article 201 with functional markings 360 on a coating 210 of the article by means of mapping a layered product 350 on said transparent article 201 in a fabrication process that is arranged for fabricating transparent articles of different sizes with selectable variation of the scaling factors of said product.

Figures 1a and 1b illustrate various advantageous embodiments of the present disclosure, wherein the production unit 150 is configured to fabricate functional markings 360 on a transparent article 201 using a layered product 350 comprising digital traces 361 and/or digital surfaces 362.

The system 101 is configured to provide automated nesting and routing of the layers 351 of the layered product 350 on the coating 210 of the article 201 based on geometrical inputs 475. The at least one laser device 170 is programmable to fabricate said markings 360 on the coating 210 of the article 201 based on the selected digital traces 361 and/or digital surfaces 362.

The displacement 490 of the at least one laser device 170 of the production unit 150 is configured to control the movement of the displacement unit 160. In an embodiment, the displacement 490 may be configured to be scaled by means of a computerized control program by means of the computerized instructions provided by the computerized production control system 101. In an embodiment of the disclosure, coordinate inputs 480 comprise waypoints for the at least one laser device 170, and the numerical displacement 490 between said waypoints may be provided by the system 101 for the displacement unit 160.

In an example, the fabrication process may comprise at least a first series of displacement 490' steps and a second series of displacement 490" steps between two heterogeneous layers 351 assigned to a scanfield 370, wherein said first series 490' is configured to provide a first passband of a first range and said second series 490" is configured to provide a second passband of a second range, wherein said displacements are configured to be less than a half of a wavelength at their respective frequencies.

In an embodiment, the layered product 350 may comprise one or more digital traces 361 and/or digital surfaces 362 processed on a single coating 210. The system 101 may be configured to select the desired digital traces 361 and/or digital surfaces 362 from the product database 410 and program the at least one laser device 170 to fabricate said markings 360 on the coating 210 of the article 201.

Figure 1b illustrates another advantageous embodiment of the present disclosure, wherein a transparent article 201 is fabricated with functional markings 350 using the production unit 150. The system 101 is configured to provide automated nesting of the layers 351 of the layered product 350 on the coating 210 of the article 201 based on geometrical inputs 475 of the article 201.

There is an advantageous alternative of the present invention in Figure 1a and Figure 1b, wherein the layered product 350 may be nested on a surface 280 that is behind and in contact with the transparent article 201 for marking the electromagnetically functional marking 360 on a surface of said article 201.

In an embodiment, the production unit 150 may be controlled with the program code 412 that is configured to enable nesting of at least one member of said layers 351 on a surface 280 that is behind and in contact with the transparent article 201 for plasma treatment of said article 201 with said at least one laser device 170 for welding an electromagnetically functional marking 360 on said article 201 with plasma formed from said surface 280, wherein at least one selectable beam parameter set 380 is configured for forming plasma from said surface 280 to form said marking 360, wherein said functional marking 360 is electrically conductive or opaque, reflective or translucent at a UV wavelength.

By the selection of the laser beam such that the transparent article is transparent to said beam, the laser energy may be advantageously configured to concentrate energy on a surface 280 that is behind and in contact with the transparent article 201 such that the concentrated energy vaporizes material from said surface in a form of plasma. This plasma is a high-temperature cloud comprising atoms and/or molecules detached from said surface 280, and by the effect of the high temperature and direct contact with the transparent article, the atoms and/or molecules are welded to the surface of the transparent article 201. This welded marking may be configured to opaque or translucent, and may be configured to form electromagnetically functional markings. An example of such marking is an antenna or an RF component on the surface of said transparent article 201. Another example is modulated reflection of UV light on the surface for creating visuals for the eyes of birds.

The above technical function can be advantageously reached by scaling the coordinate inputs 480 in at least one dimension on the basis of the nesting with the program code 412.

In an embodiment, said at least one dimension may be scaled with a thickness of the transparent article 201.

In an embodiment, the system 101 is also configured to program the at least one laser device 170 to route 500 the digital traces 361 and/or digital surfaces 362 of the layered product 350 on the coating 210 of the article 201 based on the geometrical inputs 475 of the article 201. The routing may be performed by moving the at least one laser device 170 over the coating 210 of the article 201 in a predetermined pattern.

Figure 1b also shows an example of how a scanfield 370 may be rotated for the routing. In an embodiment, the system 101 may be configured to rotate the layer comprising a digital trace or a digital surface within a scanfield, and said rotation may be provided as a parametrized input for the system 101. This allows for the creation of complex patterns and shapes on the coating 210 of the article 201.

In the present disclosure, the layered product 350 comprises a set of nested layers 351 that are to be processed by a laser beam. The layers 351 may include digital traces 361 and digital surfaces 362 that are provided by the control unit 450. The layers 351 are arranged and scaled on the coating 210 of the article 201 by the system 101 in accordance with geometrical inputs 475 of said article 201, which may vary depending on the size of the article. The system 101 may also perform programmed operations for providing combined pairs of entries as layers 351, wherein each pair comprises a member of a beam parameter set 380.

The layers 351 may be nested in a predetermined nesting area, which may be determined by the system 101 based on the geometrical inputs 475 of the article 201. The nesting area may comprise a plurality of widgets or sub-regions, each of which may have a predetermined shape and size. The system 101 may also define constraints 492 for controlling the placement of the widgets or sub-regions on the coating 210 of the article 201. The constraints 492 may specify the distance between the widgets or sub-regions and the coating edge, and the allowable overlap between the widgets or sub-regions.

In an embodiment of the disclosure, the system 101 may provide interlocks between at least two nesting regions so that the combined effect of the processed patterns (traces) expands the passband. The interlock may be defined as a constraint 492 in the system 101, and may ensure that the functional markings 360 have a desired frequency range.

The system 101 may also include means for selecting a layered product 350 to be fabricated on a transparent article 201, and a product database 410 configured to be interfaced with the control unit 450. The database 410 may store entries of digital traces 361, digital surfaces 362, and beam parameter sets 380, which may be used by the system 101 to generate the layers 351.

In an embodiment of the disclosure, the layers 351 may be scaled on the coating 210 of the article 201 by the system 101, which may include means for scaling the layered product 350. The means may be configured to scale the coordinate inputs 480 based on the geometrical inputs 475 of the article 201, and to provide positioning of at least one laser device 170 of the production unit 150 for fabricating functional markings 360 of said product 350. The nested layers 351 may be scaled on the basis of variable selection of members of a set 352 of said layers 351 over the coating 210 of said article 201 by said control unit 450, wherein said selection is varied as a function of said coordinate inputs 480.

In an embodiment of the present disclosure, the layered product 350 is configured to be routed 500 on the basis of the geometrical inputs 475 of the transparent article 201. The control unit 450 may comprise programmed operations for routing the layered product 350 on the coating 210 of the transparent article 201. The routing may comprise selecting layers 351 of the layered product 350 to be applied to the coating 210, and configuring the system 101 to vary the selection of the layers 351 as a function of the coordinate inputs 480. The control unit 450 may also comprise programmed operations for scaling the layered product 350 on the coating 210 of the transparent article 201. The coordinate inputs 480 may be scaled on the basis of the geometrical inputs 475 of the transparent article 201, and provided for positioning of at least one laser device 170 of the production unit 150 for fabricating the functional markings 360 of the layered product 350.

In an embodiment of the present disclosure, the system 101 may comprise means for controlling the nesting of the layers 351 of the layered product 350 on the coating 210 of the transparent article 201. The nesting may be controlled by means of constraints 492 that define the placement of the layers 351 on the coating 210. The constraints 492 may comprise various constraints for controlling the placement of nesting regions on the layout of the transparent article 201, including glass dimensions and tolerances. The constraints 492 may also define the possible overlap rules of various nesting regions, and define an interlock between at least two nesting regions so that the combined effect of the processed patterns expands the passband.

In an embodiment of the present disclosure, the system 101 may comprise means for automatically identifying the dimensions of the transparent article 201 to be delivered for the production unit 150 for processing. The means may comprise sensors or image detection, among other things. Optimization algorithms and artificial intelligence may also be used. The identification means may be configured to measure or detect the shape and dimensions of the transparent article 201 automatically, and to use this information for providing the geometrical inputs 475.

In an embodiment of the present disclosure, the layered product 350 may comprise digital traces 361 or digital surfaces 362. The digital traces 361 may comprise data that describes the shape and/or placement of a functional marking 360 on the transparent article 201. The digital surfaces 362 may comprise data that describes the shape and/or placement of a functional marking 360 that is not a trace, such as a uniform coating. In some embodiments, the layered product 350 may be rotated within a scanfield 370, and said rotation may be provided as a parametrized input for the system 101.

In an embodiment of the present disclosure, the selection of layers 351 for the layered product 350 may be based on a beam parameter set 380. The beam parameter set 380 may comprise parameters that describe the properties of a laser beam that is used to fabricate the functional markings 360. The beam parameter set 380 may be selected based on the passband requirements of the functional marking 360. In some embodiments, the selection of layers 351 may also be based on the position of the transparent article 201 within the production unit 150.

The scaling may comprise varying the size and/or shape of the layers 351, and/or the spacing between the layers 351, based on the selected layers 351, as well as the dimensions and/or shape of the transparent article 201. The scaling may be accomplished by means of a computerized control program provided by the computerized production control system 101. The scaling may comprise scaling of individual layers 351, or scaling of multiple layers 351 together. The scaling may be uniform or non-uniform, and may comprise scaling in one, two or three dimensions. The scaling may be provided to achieve optimal passband for each article 201 or for different articles 201. The scaling may be selected from one or more scaling factors available in a database 410, or may be provided as a new scaling factor in said database 410.

In an embodiment of the present disclosure, the system 101 may comprise means for constraining the nesting region placement on the layout of the glass area and the glass dimensions. The constraining means 492 may comprise, for example, how much tolerance is forced between some of the widget or nesting region edges and the detected or expected glass coating edge, and constraints can also define possible overlap rules of various widgets or nesting regions. Constraints can also define an interlock between at least two nesting regions so that the combined effect of the processed patterns (traces) expands the passband.

In an embodiment, the system 101 may comprise a user interface 420, which can provide the means for the operator to interact with the system 101. The user interface 420 may comprise programmed operations to visualize production statistics, upcoming production lot information, and possibly means to affect the production queue.

In an embodiment, the user interface 420 may be configured for selecting a layered product 350 on the basis of a project classification of a production lot.

In an embodiment, the user interface 420 may be configured for selecting a layered product 350 on the basis of a history list of previously produced layered products 350.

In an embodiment, the user interface 420 may be configured for nesting a transparent article 201 on the basis of a project classification of a production lot.

In an embodiment, the user interface 420 may be configured for nesting a transparent article 201 on the basis of a history list of previously produced layered products 350.

The user interface 420 may also comprise the means for selecting and visualizing the currently processed article parameters, and for selecting the layered product 350. In an embodiment, the user interface 420 may have interfaces and means to facilitate selection of the layered product 350 and/or means to visualize the currently processed article parameters in the user interface 420. The user interface 420 may also be configured to provide the operator with means for selecting the various constraints and tolerances used in the nesting process.

The system 101 may also comprise a control unit 450, which may be used for controlling the fabrication process of the layered product 350 on the transparent article 201. The control unit 450 may comprise a processor and be configured for storing and retrieving entries of digital traces 361, digital surfaces 362, and beam parameter sets 380 from a product database 410.

In an embodiment, the control unit 450 may be interfaced with the user interface 420, the IP connection 122, and the glass delivery system 125, to control and monitor the fabrication process of the layered product 350. The control unit 450 may also be configured to perform programmed operations for providing combined pairs of the aforesaid entries as layers 351 to be selected on the basis of coordinate inputs 480, wherein each of said pairs comprises a member of a beam parameter set 380.

The control unit 450 may further comprise the means for scaling the layered product 350 on the coating 210 of the transparent article 201, wherein the coordinate inputs 480 are scaled on the basis of geometrical inputs 475 of the transparent article 201 and provided for positioning of at least one laser device 170 of the production unit 150 for fabricating functional markings 360 of said layered product 350. The system 101 may also comprise the means for varying the size and/or shape of the layers 351, and/or the spacing between the layers 351, based on the selected layers 351.

The present disclosure provides a process for fabricating functional markings on transparent articles by means of mapping layered products 350 on the transparent articles in a fabrication process that is arranged for fabricating transparent articles of different sizes. The process comprises providing a production unit 150 that comprises a computerized production control system 101, which is configured for automating the process of providing nested layers of a layered product 350 on transparent articles 201 of different sizes.

In the process, the system 101 selects a layered product 350 to be fabricated on a transparent article 201, and a product database 410 is provided that is configured to be interfaced with the control unit 450 of said system 101. The database 410 is programmed to store and retrieve entries of digital traces 361, digital surfaces 362, and beam parameter sets 380.

The control unit 450 performs programmed operations for providing combined pairs of the aforesaid entries as layers 351 to be selected on the basis of coordinate inputs 480. The layers 351 are nested on the coating 210 of said article 201 as a layered product 350 and on the basis of geometrical inputs 475 of said article 201 and are programmatically routed 500 on the basis of said geometrical inputs 475 to fabricate said product 350 on said coating 210.

The layered product 350 is scaled on a coating 210 of said article 201 based on the selected layers 351. The scaling may comprise varying the size and/or shape of the layers 351, and/or the spacing between the layers 351, based on the selected layers 351.

Constraints 492 may be used to control the nesting region placement on the layout of the glass area and glass dimensions, including how much tolerance is forced between some of the widget or nesting region edges and the detected or expected glass coating edge. The system 101 may be configured to receive an IP connection 122 that can be used to update the layered products or layers or beam parameter sets to the database and to read system data, statistics and other parameters. The system 101 also provides a user interface 420 that comprises programmed operations to visualize production statistics, upcoming production lot information, and possibly means to affect the production queue. The interface may also display widgets for controlling the nesting regions on the transparent article.

At the beginning of the process, the computerized production control system 101 receives the geometrical inputs 475 of the transparent article 201 to be processed, as well as any other relevant information about the article, such as the dimensions and coating information. The system 101 also retrieves the entries of digital traces 361, digital surfaces 362, and beam parameter sets 380 from the product database 410.

Using the coordinate inputs 480 provided by the system 101, the control unit 450 selects layers 351 from the database 410 and combines them into a layered product 350, taking into account any constraints 492 that have been defined. The selection of layers 351 may also be varied based on the coordinate inputs 480 and other parameters such as the desired passband range.

Once the layered product 350 has been created, the system 101 uses the displacement 490 of the at least one laser device 170 to control the movement of the displacement unit 160. The system 101 may also scale the layered product 350 to fit the geometrical inputs 475 of the transparent article 201.

The displacement 490 between waypoints in the layered product 350 may be provided by the system 101, and the numerical displacement between said waypoints may be used to control the movement of the at least one laser device 170. The displacement may be configured to be less than half of a wavelength at their respective frequencies, allowing for precise control of the functional markings 360 that are being applied to the transparent article 201.

As the layered product 350 is being processed, the system 101 monitors the quality of the functional markings 360 being applied to the transparent article 201. If any process faults are detected, the system 101 may initiate a fault release 126 and notify the operator or the background control system of the issue.

The user interface 420 may be used to visualize the progress of the processing, including production statistics, upcoming production lot information, and the current parameters being used in the fabrication process. The user interface 420 may also include widgets that allow the operator to interact with the system 101 and adjust various parameters, such as the scaling factors or the passband range, in real-time.

Overall, the process for fabricating functional markings 360 on a transparent article 201 using the production unit 150 involves selecting layers 351 from the product database 410, combining them into a layered product 350, and processing the layered product 350 on the transparent article 201 using the at least one laser device 170. The computerized production control system 101 provides precise control over the movement of the at least one laser device 170, as well as the scaling and routing of the layered product 350, to ensure that the functional markings 360 are applied accurately and efficiently. The user interface 420 provides real-time feedback on the processing progress and allows the operator to adjust various parameters to optimize the fabrication process.

In an embodiment of the present disclosure, the computerized production control system 101 controls the fabrication process of functional markings 360 on transparent articles 201 by mapping a layered product 350 on the transparent article 201. The system 101 is configured to select the layered product 350 and provide the beam parameter sets 380, digital traces 361, and digital surfaces 362 from the product database 410 for the control unit 450.

In an embodiment, the control unit 450 is configured to select the members of the layered product 350 to be nested on the coating 210 of the transparent article 201 based on the coordinate inputs 480. The control unit 450 is also configured to provide the layered product 350 with the programmed operations for routing 500 and scaling the layers 351 on the transparent article 201 based on geometrical inputs 475 of the transparent article 201.

In an embodiment, the computerized production control system 101 further comprises an IP connection 122 to interface with the product database 410. This allows the system 101 to be updated with new layered products or layers, beam parameter sets, digital traces, and digital surfaces. The system data, statistics, and other parameters may also be read via the IP connection 122.

In an embodiment, the computerized production control system 101 comprises a user interface 420 that provides the operator with the means to select the layered product 350 to be fabricated, set the beam parameter sets 380, digital traces 361, and digital surfaces 362 for the control unit 450, and monitor the progress of the production process. The user interface 420 may comprise programmed operations to visualize production statistics, upcoming production lot information, and means to affect the production queue.

In an embodiment, the computerized production control system 101 may comprise programmed operations for constraining the nesting region placement on the layout of the transparent article 201. The constraints may include the tolerance forced between some of the widget or nesting region edges and the detected or expected coating edge of the transparent article 201. The constraints may also define the possible overlap rules of various widgets or nesting regions and define an interlock between at least two nesting regions so that the combined effect of the processed patterns expands the passband.

In an embodiment, the computerized production control system 101 may comprise programmed operations for automatically identifying the dimensions of the transparent article 201 to be delivered for processing. The system may use sensors or image detection, among other means, to measure or detect the shape and dimensions of the transparent article 201 automatically. Optimization algorithms and artificial intelligence may also be used to improve the efficiency and accuracy of the measurement and detection process.

In an embodiment of the present disclosure, the functional markings 360 on the transparent article 201 may comprise a digital trace or digital surface with specific geometries and shapes. The digital trace or digital surface may be selected from a library of digital traces and digital surfaces stored in the database 410, and may be edited or modified by the control unit 450 before being included in a layered product 350.

Furthermore, in an embodiment, the production unit 150 may comprise means for scanning the coating 210 of the transparent article 201 to determine the presence and position of pre-existing marks or features on said coating, which may then be used by the system 101 to modify the placement or geometry of the functional markings 360 accordingly.

Additionally, in an embodiment, the production unit 150 may comprise a feedback system for monitoring the quality of the functional markings 360 being fabricated on the transparent article 201, such as a quality control system for detecting and correcting defects in the marking process. The feedback system may be configured to adjust the parameters of the laser device 170 or the displacement unit 160 in real time, based on the feedback information, to optimize the quality of the functional markings 360.

Moreover, in an embodiment of the present disclosure, the production unit 150 may be configured to produce multiple layered products 350 simultaneously, by providing multiple scanning fields 370 or by providing multiple laser devices 170 for simultaneous processing. This may increase the efficiency of the production process and reduce the time required to fabricate functional markings 360 on multiple transparent articles 201.

Finally, in an embodiment, the production unit 150 may be configured to fabricate functional markings 360 on a wide range of transparent articles 201, including but not limited to glass, plastic, and metal substrates. The production unit 150 may be adapted to handle various sizes and shapes of transparent articles 201, and may be configured to produce customized functional markings 360 based on customer specifications.

These embodiments and features may be combined in various ways to provide a versatile and efficient system for fabricating functional markings 360 on transparent articles 201, and may be adapted to various manufacturing and production settings.

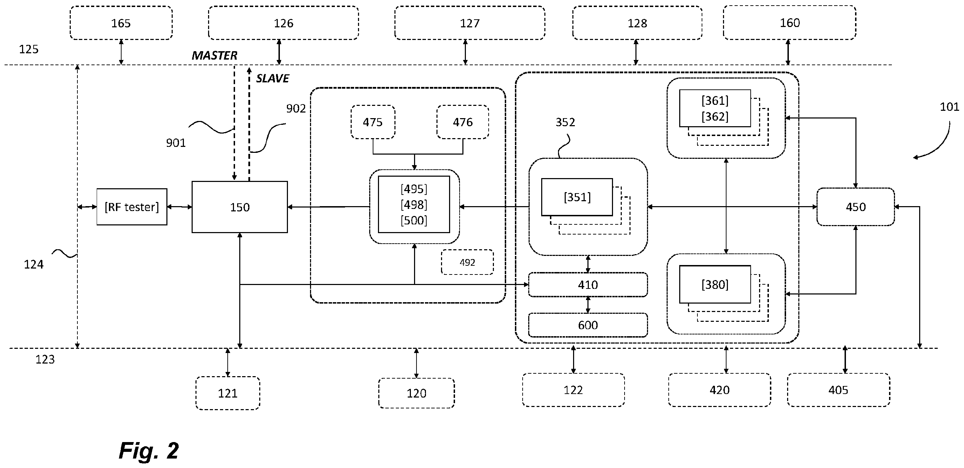

Figure 2 presents various advantageous embodiments of the present disclosure. There is provided a production unit 150 for fabricating functional markings 360 on transparent articles 201, comprising a computerized production control system 101, configured for mapping layered products 350 on transparent articles 201 in a fabrication of varying article sizes of the transparent articles 201, wherein said system 101 is configured to provide automated nesting of the layers of a layered product 350 on transparent articles 201 of different sizes.

In an embodiment, the system 101 comprises means for selecting a layered product 350 to be fabricated on a transparent article 201, and a product database 410 configured to be interfaced with a control unit 450 of said system 101 and configured, by programmed operations of the control unit 450, for storing and retrieving entries of digital traces 361, digital surfaces 362, and. beam parameter sets 380.

In an embodiment, the control unit 450 comprises a processor and is configured to be interfaced with a readable memory 405. In said embodiment, the memory 405 is configured to comprise the database 410.

In an embodiment, said control unit 450 is configured to perform programmed operations for providing combined pairs of the aforesaid entries as layers 351 to be selected on the basis of coordinate inputs 480, wherein each of said pairs comprises a member of a beam parameter set 380.

The layers 351 are configured to be nested on the coating 210 of said article 201 as a layered product 350 and on the basis of geometrical inputs 475 of said article 201 and to be programmatically routed 500 on the basis of said geometrical inputs 475 to fabricate said product 350 on said coating 210.

In an embodiment, the system 101 comprises means for scaling the layered product 350 on a coating 210 of said article 201, wherein said coordinate inputs 480 are scaled on the basis of geometrical inputs 475 of said article 201 and provided for positioning of at least one laser device 170 of the production unit 150 for fabricating functional markings 360 of said product 350.

Said nested layers 351 are configured to be scaled on the basis of variable selection of members of a set 352 of said layers 351 over the coating 210 of said article 201 by said control unit 450, wherein said selection is varied as a function of said coordinate inputs 480.

In an embodiment, the production unit 150 further comprises means for automated Z-adjust for laser focus on coating 120. The means for coating surface determination 121 may be provided for determining the surface topology of said transparent articles 201.

The system 101 further comprises an IP connection 122 for accessing the database 410 and for providing the necessary control signals for the production unit 150.

In an embodiment, the production unit 150 further comprises a conveyer 165 for delivering the transparent articles 201 for processing and for possibly removing the transparent articles 201 from under the laser 170. The conveyer 165 can be a robotic arm or a roll-based conveyer.

The nested layered products 351 may be configured to be positioned on the coating 210 of said article 201 based on nesting constraints 492. The nesting constraints 492 can control the placement of the nesting region on the layout of the transparent article 201 and define the possible overlap rules of various nested regions.

In an embodiment, the system 101 comprises an identification system 127, which detects the transparent articles 201 to be processed and facilitates the selection of the layered product 350. The identification system 127 may be synchronized with a production queue list and has interfaces and means to visualize the currently processed article parameters in the user interface 420. In an embodiment, the interface 420 comprises programmed operations to visualize production statistics and upcoming production lot information and possibly means to affect the production queue.

The production unit 150 further comprises a loading/offloading station 128 for inputting the transparent articles 201 into the production unit 150 and removing them after processing.

In an embodiment, the system 101 further comprises a product counter 600, which counts the number of layered products 350 that have been processed. The system 101 may be configured to control the availability of the processing or marking functions based on the counter outputs.

In an embodiment, the production unit 150 may further comprise a RF-tester 620, which is configured to output a microwave signal at any of the passbands and to measure the interactions of said signal with the layered product 350 to make a comparison of the measured interaction with some desirable quality target. The RF-tester 620 may be interfaced with an artificial intelligence for observing the production quality and statistics. It may also be interfaced with the IP connection 122 and/or the database 410.

The system 101 may comprise means for automatically identifying the dimensions of the transparent articles 201 to be delivered for processing. These means can be sensors, image detection or the like, and may be optimized by algorithms or artificial intelligence. The system 101 may also identify the position of the transparent articles 201 to align the coordinate inputs 480 accordingly. It may also be configured to measure or detect the shape and dimensions of the transparent articles 201 automatically and use this information for providing the geometrical inputs 475.

In an embodiment, the system 101 may comprise a background process 123, which provides IP connections, general production control, and any necessary means needed for the production unit 150. The background process 123 has an interface 124 with the glass delivery system 125, which can be used for receiving and sending information and control signals between the background process 123 and the glass delivery system 125. The background process 123 further comprises a process fault release 126, which is configured to release faults detected in the production process.

The initiation flag 901 signals from a computerized system for the control system 101 that the transparent article 201 is in place, and processing can start. The release flag 902 signals that the layered product 350 has been processed, and the transparent article 201 can be conveyed forward in the processing line. The system 101 may comprise means to track the quality of processing or any possible errors, and the system can act based on the error systems.

The production unit 150 further comprises means for automated Z-adjust for laser focus on the coating 210, which can be accomplished through the use of, for example, a surface determination unit 121. Additionally, the production unit 150 may include an IP connection 122, which has access to the database 410 and facilitates communication between the various components of the production unit 150.

In an embodiment, the production unit 150 includes a conveyer 165 for delivering the transparent article 201 for processing and possibly removing the transparent article 201 from under the laser device 170. The conveyer 165 can be a robotic arm or a roll-based conveyer.

The production unit 150 may also include means for nesting 495, scaling 498, and routing 500 the layers 351 on the coating 210 of the transparent article 201. The nesting means 495 may comprise various constraints 492 for controlling the placement of the nesting region on the layout of the coating 210 of the transparent article 201. These constraints 492 may define an interlock between at least two nesting regions so that the combined effect of the processed patterns (traces) expands the passband. In an embodiment of the disclosure, the system is configured to control the availability of the processing or marking functions based on the product counter 600 outputs.

In an embodiment, the production unit 150 may include a RF-tester 620 that is interfaced with an artificial intelligence system for observing the production quality and statistics. The RF-tester 620 may also be interfaced with the IP connection 122 and/or the database 410.

The production unit 150 may include an identification system 127 that comprises means to detect which of the transparent articles 201 shall be processed and which not. The identification system 127 may synchronize with a production queue list and may also have interfaces and means to facilitate selection of the layered product 350 and/or means to visualize the currently processed article parameters in the user interface 420.

In an embodiment, the production unit 150 includes a loading/offloading station 128 that is used for inputting the transparent article 201 into the unit 150 and removing the transparent article 201 from the unit 150. The loading/offloading station 128 is related to the glass delivery system 125 and conveyer 165.

Computerized means can be used to automatically identify the dimensions of the transparent article 201 to be delivered for the production unit 150 for processing. These means may comprise sensors or image detection, among other things. Optimization algorithms and artificial intelligence may also be used.

The production unit 150 described in Figure 2 provides an automated system for fabricating functional markings 360 on transparent articles 201. This production unit is capable of processing transparent articles of varying sizes and is designed to provide automated nesting of the layers of a layered product 350 on the coating of these articles. The unit's computerized production control system 101 selects the layered product to be fabricated on a transparent article and provides coordinated inputs to program the nesting of the layers on the coating.

The control unit 450 of system 101 is configured to perform programmed operations for providing combined pairs of the entries in the product database 410 as layers 351. These layers are nested on the coating of an article and programmatically routed 500 to fabricate the layered product 350 on the coating. The layered products 350 are scaled on the basis of variable selection of members of a set 352 of these layers over the coating of an article by the control unit 450. This selection is varied as a function of the coordinated inputs 480.

The control unit 450 of system 101 is also capable of interfacing with a readable memory 405, which in an embodiment includes the product database 410. This database is configured to store and retrieve entries of digital traces 361, digital surfaces 362, and beam parameter sets 380. The processor in control unit 450 is configured to select a beam parameter set 380 for each member of a layered product 350 based on coordinated inputs 480, with the nested layers 351 being scaled on the basis of this variable selection.

The production unit 150 is also designed to include several other features that support its automated processing of transparent articles. For example, there is a means for automated Z-adjust for laser focus on coating 120, which ensures accurate laser processing by adjusting the focus on the coating. Additionally, there is a means for coating surface determination 121, which is used to determine the location and orientation of the coating on the article for accurate processing.

The unit also includes a glass delivery system 125 for loading and offloading articles to be processed. The system 101 comprises an IP connection 122 with access to the database 410 and a background process 123 to facilitate general production control and other necessary means. The identification system 127 comprises means for detecting which of the glass articles are to be processed, and there is a loading/offloading station 128 for the glass delivery system. Finally, the product counter 600 counts how many layered products have been processed and controls the availability of the processing or marking functions based on the counter outputs.

Embodiments of the control system 101 shown in Figure 2 provide several advantageous features for fabricating functional markings 360 on transparent articles 201. The system is computerized and configured to map layered products 350 on transparent articles 201 of varying sizes, and can automatically nest the layers of a layered product 350 on transparent articles 201 of different sizes. This allows for efficient and flexible production of functional markings 360 on transparent articles 201.

In an embodiment, the system 101 comprises means for selecting a layered product 350 to be fabricated on a transparent article 201, and a product database 410 for storing and retrieving entries of digital traces 361, digital surfaces 362, and beam parameter sets 380. The control unit 450 of the system may be configured to perform programmed operations for providing combined pairs of the aforesaid entries as layers 351. These layers 351 are then nested on the coating 210 of the article 201 to form the layered product 350.

The control unit 450 of system 101 may also be configured to perform programmed operations for scaling the layered product 350 on the coating 210 of the article 201. This is done by scaling the coordinate inputs 480 on the basis of geometrical inputs 475 of the article 201 and providing them for positioning of at least one laser device 170 of the production unit 150. This feature allows for precise and accurate fabrication of functional markings 360 on transparent articles 201.

In an embodiment, the system 101 may comprise an IP connection 122 that provides access to the database 410. This connection allows for seamless integration with other systems and processes in a production facility, and allows for efficient sharing of data and resources. The system may also include a background process 123 that provides general production control and interfaces with the glass delivery system 125.

The control system 101 may also include initiation and release flags 901, 902 that signal the start and completion of the fabrication process. These digital or visual flags, such as light signals, ensure that the transparent article 201 is in place and that the layered product 350 has been processed before it is conveyed forward in the processing line. Additionally, the system 101 may comprise means to track the quality of processing or any possible errors, which can be used to inform the production queue and prevent defective products from being released.

In an embodiment of the present disclosure, the control system 101 is programmed to include a program code 412 for performing various functions related to the fabrication of functional markings 360 on transparent articles 201. The program code 412 is stored in a readable memory 405, which can be interfaced with the control unit 450 of the system 101. The program code 412 comprises various instructions that enable the control unit 450 to perform various tasks related to the fabrication of the layered product 350 on the transparent article 201.

In one aspect of the disclosure, the program code 412 may be configured to provide automated nesting of the layers of the layered product 350 on the transparent article 201. The program code 412 may comprise instructions for selecting a layered product 350 to be fabricated on a transparent article 201 and for storing and retrieving entries of digital traces 361, digital surfaces 362, and beam parameter sets 380 from a product database 410.

The program code 412 may also include instructions for providing combined pairs of the entries as layers 351 on the basis of coordinate inputs 480, wherein each pair comprises a member of a beam parameter set 380. The program code 412 may further include instructions for routing the nested layers 351 on the transparent article 201 on the basis of geometrical inputs 475 of the article 201 and for scaling the nested layers 351 on the basis of variable selection of members of a set 352 of the layers 351 over the coating 210 of the article 201.

In another aspect of the disclosure, the program code 412 may comprise instructions for interfacing with an artificial intelligence system to observe the production quality and statistics. The program code 412 may also include instructions for interfacing with an RF-tester 620 to measure the interactions of a microwave signal with the layered product 350 and for comparing the measured interaction with a desirable quality target. Additionally, the program code 412 may include instructions for automatically identifying the dimensions of the glass to be delivered for the system 101 or the unit 150 or 450 for processing using sensors, image detection, optimization algorithms, or artificial intelligence.

Overall, the program code 412 is an essential part of the control system 101 of the production unit 150. It enables the control unit 450 to perform a variety of tasks related to the fabrication of the layered product 350 on the transparent article 201, such as automated nesting of the layers, scaling of the nested layers, interfacing with artificial intelligence and RF-tester systems, and identifying the dimensions of the glass to be processed. The program code 412 thus provides a versatile and efficient means of controlling the production unit 150 and ensuring the quality of the fabricated product.

In an embodiment of the present disclosure, the IP connection 122 of the system 101 can be configured to allow updating of layered products or layers or beam parameter sets to the database 410 via said connection. This allows for efficient updating of the database without the need for manual intervention, thereby reducing production downtime and improving production efficiency.

In another embodiment, the IP connection 122 can also be used to read system data, statistics, and other parameters, which can be analyzed to optimize production processes, detect potential problems, and improve quality control measures. This feature allows for real-time monitoring of the production line and can enable proactive measures to be taken to avoid production interruptions and to optimize production efficiency.

Furthermore, the system 101 may be configured to provide nesting areas for the layered products, where the layered products are arranged in a way that optimizes material usage and reduces wastage. The nesting areas may be programmatically defined based on the dimensions of the transparent articles and the layered products, as well as other factors such as production capacity and material availability.

In an embodiment, the nesting areas may be defined using constrains 492 that specify the allowable placement of the layered products on the transparent articles. The constrains may include rules for the placement of nested layers with respect to each other, as well as rules for overlapping regions of nested layers. The nesting areas may also be optimized using optimization algorithms, which can analyze the dimensions and geometry of the transparent articles and layered products, as well as other factors, to minimize material usage and reduce wastage.

The ability to provide nesting areas for layered products in an efficient and optimized manner, combined with the ability to update and analyze system data via the IP connection, make the production unit 150 a highly advanced and efficient system for fabricating functional markings on transparent articles.

These features can enable manufacturers to produce high-quality, custom-made transparent articles at a lower cost, with reduced wastage, and with greater production efficiency.

Routing is a crucial aspect of the present disclosure, as it enables the layered product 350 to be accurately and efficiently fabricated on the coating 210 of the transparent article 201. The system 101 is configured to programmatically route the layers 351 on the basis of geometrical inputs 475 of the article 201, ensuring that the layered product 350 is fabricated in the desired location and configuration.

In an embodiment, the system 101 comprises means for scaling the layered product 350 on the coating 210 of the transparent article 201, wherein the coordinate inputs 480 are scaled on the basis of the geometrical inputs 475 of the article 201 and provided for positioning of at least one laser device 170 of the production unit 150. The nested layers 351 may also be scaled on the basis of variable selection of members of a set 352 of said layers 351 over the coating 210 of the transparent article 201 by the control unit 450, wherein the selection is varied as a function of the coordinate inputs 480.

The routing process may also involve the use of constrains 492 to control the placement of nesting regions on the layout of the glass area and dimensions. The constrains may define how much tolerance is forced between some of the widget or nesting region edges and the detected or expected glass coating edge, and may also define possible overlap rules of various widgets or nesting regions. Furthermore, the constrains may define an interlock between at least two nesting regions so that the combined effect of the processed patterns (traces) expands the passband.

In an embodiment, the system 101 may comprise means for automatically identifying the dimensions of the transparent article 201 to be delivered for processing. This may involve the use of sensors or image detection, among other things. Optimization algorithms and artificial intelligence may also be used. By automatically identifying the dimensions of the transparent article 201, the routing process can be optimized to ensure that the layered product 350 is fabricated in the desired location and configuration.

Overall, the routing process is an essential component of the present disclosure, as it enables the layered product 350 to be accurately and efficiently fabricated on the coating 210 of the transparent article 201. By programmatically routing the layers 351 on the basis of geometrical inputs 475 of the article 201, the system 101 can ensure that the layered product 350 is fabricated in the desired location and configuration, while also optimizing the routing process to reduce the required processing time.

In a fabrication, a transparent article 201 is delivered to the production unit 150 for fabrication of functional markings 360 using a layered product 350. The system 101 receives the article 201 and determines its size and shape or receives said information on the basis of a manual or an automated input. Based on this information, the system 101 may select a layered product 350, or the scaling instructions from the product database 410 that are appropriate for the article 201.

The selected layered product 350 is then nested on the coating 210 of the article 201. The system 101 scales the layers 351 of the product 350 to fit within the constraints of the coating 210, and routes the layers 351 to fabricate the product 350 on the coating 210. The system 101 also ensures that the layers 351 are properly aligned and spaced for optimal functionality.

Once the layers 351 have been routed, the system 101 controls the at least one laser device 170 to fabricate the functional markings 360 on the coating 210. The laser device 170 scans across the coating 210, emitting pulses of radiation to remove portions of the coating 210 and reveal the underlying material.

As the laser device 170 moves, the displacement unit 160 is controlled by a member of the system 101 to adjust the position and orientation of the laser device 170 for optimal results. The system 101 also monitors the progress of the fabrication process and adjusts the laser parameters or focus, if necessary, to ensure consistent quality across multiple articles 201.

When the fabrication process is complete, the system 101 sends a release flag 902 to signal that the layered product 350 has been processed and the article 201 can be conveyed forward in the processing line. The production unit 150 may be part of a larger production line, in which case the release flag 902 also signals to the external production control system that the article 201 is ready for further processing.

In an embodiment, the input flag 901 or the release flag 902 may be a digital communication signal shared via a communication interface 124 arranged between at leas two members of the system 101.

Overall, the production unit 150 provides a highly precise and efficient means of fabricating functional markings 360 on transparent articles 201. By using a layered product 350 and a computerized production control system 101, the unit 150 can automate many of the processes involved in the fabrication, resulting in faster turnaround times and more consistent quality.

The computerized production control system 101 may receive inputs from various sources via its communication interface 124, including the glass delivery system 125, the loading/offloading station 128, and the identification system 127. The system may use these inputs to determine which transparent articles 201 are flagged for processing and which layered products 350 are needed to fabricate the desired functional markings 360.

Once the system 101 has the information which layered products 350 are needed, it selects the appropriate digital traces 361, digital surfaces 362, and beam parameter sets 380 from the product database 410. The system then combines these entries into layers 351, which are nested on the coating 210 of the transparent article 201 based on geometrical inputs 475 and coordinate inputs 480. In an alternative embodiment, combined pairs of the above inputs may also be provided for the system 101 for direct nesting and routing purposes, and the system 101 may skip the layer merging phase.

In the nesting of the layered products 350, the system scales the layered products 350 based on the geometrical inputs 475 and the selected layers 351. This scaling may involve varying the size and/or shape of the layers 351, and/or the spacing between the layers 351, based on the selected layers 351.

The system then routes the nested and scaled layered products 350 on the transparent articles 201 based on the geometrical inputs 475. This routing involves providing coordinate inputs 480 to the at least one laser device 170 of the production unit 150, which uses these inputs to fabricate the functional markings 360 on the coating 210 of the transparent article 201.

In an advantageous embodiment, the system 101 performs the nesting on the basis of the coordinate inputs 480 or by constraining selected layers on nesting regions on the basis of pre-configured nesting areas and constraints.

Throughout the process, the system 101 may track various production data and statistics, including the number of layered products 350 processed and the quality of the fabricated functional markings 360. This information is stored in the database 410 and can be accessed through the user interface 420, which may include applications for visualizing production statistics and controlling various aspects of the production process.

The system may also be configured to update the database 410 and/or the layered products 350 based on new information received through the IP connection 122.

In an embodiment of the present disclosure, the program code 412 is configured to receive and process input data related to digital traces 361, digital surfaces 362, and beam parameter sets 380. The input data may be stored in the database 410, which is configured to be interfaced with the control unit 450 of the production unit 150. The control unit 450 comprises a processor and is configured to be interfaced with a readable memory 405, which in turn comprises the database 410.

The program code 412 may be further configured to receive coordinate inputs 480 related to the placement and scaling of the layered products 350 on the transparent articles 201. These inputs may comprise geometrical inputs 475 related to the dimensions and shape of the transparent article 201, which may be automatically identified by computerized means, such as sensors or image detection. The program code 412 may also be configured to interface with an artificial intelligence for observing the production quality and statistics.

In an embodiment, the program code 412 may be configured to receive updates to the database 410 via an IP connection 122. These updates may include new digital traces 361, digital surfaces 362, and beam parameter sets 380, which may be added to the database 410 for future use in the production process. The program code 412 may also be configured to read system data, statistics, and other parameters via the IP connection 122.

The program code 412 may be configured to control the at least one laser device 170 of the production unit 150 based on the input data and coordinate inputs 480 received. The program code 412 may also be configured to control the displacement unit 160, which is used to move the at least one laser device 170 in a predetermined pattern over the transparent article 201. The displacement unit 160 may be configured to be scaled by the program code 412, based on the numerical displacement 490 between the waypoints provided by the coordinate inputs 480.

In an embodiment of the present disclosure, the program code 412 is further configured to process constrains 492 for controlling the placement and size of the nesting regions on the layout of the glass area. The constrains 492 may comprise rules for controlling the distance between the nesting regions and the detected or expected glass coating edge, as well as overlap rules for various widgets or nesting regions. The program code 412 may also define an interlock between at least two nesting regions so that the combined effect of the processed patterns expands the passband.

The program code 412 may further be configured to provide routing 500 for the layered products 350 on the transparent article 201, based on the geometrical inputs 475 received. The routing 500 may comprise varying the size and/or shape of the layers 351, and/or the spacing between the layers 351, based on the selected layers 351. The program code 412 may also be configured to provide scaling for the layered products 350 on the transparent article 201, based on the geometrical inputs 475 received.

In an embodiment of the present disclosure, the program code 412 may be configured to provide an identification system 127 for detecting which of the transparent articles 201 shall be processed and which not. The identification system 127 may comprise means for synchronizing with a production queue list and detecting the shape and dimensions of the transparent articles 201 automatically. The program code 412 may also be configured to provide an interface 124 for the glass delivery system 125 and user interface 420, which may comprise programmed operations to visualize production statistics, upcoming production lot information, and possibly means to affect the production queue.

In an embodiment, said system 101 may be configured to be interfaced with a computerized program code 412, which is stored on a readable memory and configured to provide computerized instructions for the control unit 450 for controlling the at least one laser device 170, wherein said control comprises programming of beam parameters of said laser device 170, and said program code 412 comprises instructions for selecting and combining entries of the database 410 as layers 351, and for providing the layered product 350 as a product file for controlling the at least one laser device 170. Said program code 412 is configured to receive the layered product 350 from the control unit 450 and to provide said layered product 350 for controlling the at least one laser device 170. Said program code 412 is configured to receive the identification data of said transparent article 201 from said system 101, and is further configured to update the entries of the database 410 by means of an IP connection. The program code 412 may be further configured to read the data of said entries of the database 410 and to update the entries of the database 410 based on said data. The program code 412 may also be configured to control the operation of the background process 123 and/or the identification system 127, and to receive feedback from said systems for updating the entries of the database 410. The program code 412 may also comprise means for providing an operator interface for said system 101.

Overall, the program code 412 may be configured to receive and process input data related to digital traces 361, digital surfaces 362, and beam parameter sets 380, as well as other relevant data inputs related to the production unit 150. The program code 412 is also configured to interface with the control unit 450, which is responsible for controlling the various components of the production unit 150. The program code 412 is further configured to receive input data related to the geometrical inputs 475, coordinate inputs 480, and other relevant data inputs related to the fabrication process. The program code 412 is also configured to provide instructions for scaling and routing the layers 351 of the layered product 350 on the coating 210 of the transparent article 201, as well as for controlling the movement and positioning of the at least one laser device 170.

In an embodiment of the disclosure, the program code 412 may be configured to receive input data related to the properties of the transparent article 201, such as its dimensions, shape, and surface properties, and to use this data to optimize the fabrication process. The program code 412 is also configured to receive input data related to the properties of the functional markings 360, such as their dimensions, position, and functionality, and to use this data to optimize the fabrication process.

In an embodiment of the disclosure, the program code 412 may be configured to interface with a database system 410, which is responsible for storing and retrieving data related to the fabrication process. The program code 412 is further configured to receive input data related to system data, statistics, and other parameters, and to use this data to optimize the fabrication process.

In an embodiment of the disclosure, the program code 412 may be configured to interface with an IP connection, which allows for remote access and control of the production unit 150. The program code 412 is also configured to receive input data related to the layered products 350, layers 351, and beam parameter sets 380, and to update the database system 410 with this data via the IP connection.

Overall, the program code 412 is responsible for controlling and optimizing the various components of the production unit 150 and for ensuring the efficient and accurate fabrication of functional markings 360 on transparent articles 201.

In a method of producing functional markings on transparent articles, the present disclosure provides a process for selecting a layered product to be fabricated on a transparent article, wherein said layered product is composed of nested layers comprising digital traces, digital surfaces, and beam parameter sets. The process involves a computerized production control system configured to interface with a product database and control unit. The database is used to store and retrieve entries of digital traces, digital surfaces, and beam parameter sets, while the control unit provides programmed operations for combining pairs of said entries as layers to be selected based on coordinate inputs. These layers are then nested on the coating of said article and routed programmatically to fabricate said product on said coating.

The nesting of said layers on the transparent article is performed by the control unit, which is configured to provide automated nesting of the layers of a layered product on transparent articles of different sizes. The nested layers are scaled and spaced based on the selected layers to optimize the passband characteristics of the layered product. In an embodiment of the disclosure, the nesting is controlled by constraining the placement of nesting regions on the layout of the glass area, including constraints on glass dimensions, tolerance between nesting region edges and the detected or expected glass coating edge, and overlap rules of various widgets or nesting regions. Interlock constraints between at least two nesting regions may also be used to expand the passband by combining the effect of the processed patterns (traces).

The control unit 450 may also configured to perform programmed operations for selecting and providing layers of a layered product. In one embodiment, the selection and provision of layers is varied as a function of the coordinate inputs, and may include variable scaling of the size and/or shape of the layers and/or the spacing between the layers based on the selected layers. The selected layers are then provided to a laser device for fabrication of functional markings on the transparent article.

In the process of fabricating functional markings on a transparent article, the present disclosure further provides a method of controlling the movement of the laser device by means of displacement control. The displacement of the at least one laser device is controlled by a displacement unit, which may be configured to be scaled by means of a computerized control program provided by the computerized production control system. In an embodiment of the disclosure, coordinate inputs comprise waypoints for the laser device, and the numerical displacement between said waypoints may be provided by the system for the displacement unit.

Overall, the present disclosure provides a method of fabricating functional markings on transparent articles that involves the use of a computerized production control system for selecting layered products, nesting layers, and routing the layers to fabricate said product on the coating of said article. The control unit of the system is configured to interface with a product database and memory, and may be used to control the movement of the laser device by means of displacement control. The use of constraints and interlocks in the placement of nesting regions on the layout of the glass area ensures the optimization of the passband characteristics of the layered product.

In an embodiment of the present disclosure, a method for fabricating functional markings on a transparent article is provided. The method comprises providing a production unit 150, which is configured for mapping a layered product 350 on a transparent article 201 in a fabrication process that is arranged for fabricating transparent articles of different sizes with selectable variation of the scaling factors of said product. The production unit 150 comprises a computerized production control system 101 that is configured to control the production process.

The method further comprises selecting a layered product 350 to be fabricated on a transparent article 201 based on the dimensions and other characteristics of the article 201. The system 101 is configured to provide automated nesting of the layers of the layered product 350 on transparent articles 201 of different sizes. The nested layers 351 are configured to be routed 500 on the basis of geometrical inputs 475 of said article 201 to fabricate said product 350 on said coating 210.

The method also comprises providing combined pairs of digital traces 361, digital surfaces 362, and beam parameter sets 380 as the layers 351. Each of said pairs comprises a member of a beam parameter set 380. The system 101 is configured to select members of the beam parameter set 380 based on the coordinate inputs 480 provided by the user.

The method further comprises scaling the nested layers 351 based on the selected layers 351 and the dimensions and other characteristics of the article 201. The scaling may comprise varying the size and/or shape of the layers 351, and/or the spacing between the layers 351, based on the selected layers 351. The nested layers 351 are configured to be scaled on the basis of variable selection of members of a set 352 of said layers 351 over the coating 210 of said article 201 by said control unit 450, wherein said selection is varied as a function of said coordinate inputs 480, which are subjected to said geometrical inputs 475. The system 101 is configured to provide the necessary instructions to the laser device 170 for processing the nested layers 351.

In an embodiment of the disclosure, the system 101 comprises means for selecting a layered product 350 to be fabricated on a transparent article 201, and a product database 410 configured to be interfaced with a control unit 450 of said system 101 and configured, by programmed operations of the control unit 450, for storing and retrieving entries of digital traces 361, digital surfaces 362, and beam parameter sets 380. The system 101 may be configured to provide updates to the database 410 via an IP connection 122. The system 101 may also be configured to receive system data, statistics and other parameters from the database 410 via the IP connection 122.

Based on the previously described elements and embodiments of Figure 2, it should be noted that the production unit 150 may be configured to process a large variety of transparent articles 201, including those with complex geometries or coatings. Additionally, the system 101 may be programmed to adjust the layer nesting and routing process based on the specific article being processed, allowing for optimal use of processing time.

In an embodiment, the system 101 may include means for identifying and rejecting defective transparent articles 201 or layered products 350, thereby increasing the efficiency of the production process. The system 101 may also be configured to generate production reports and statistics based on the processing of transparent articles 201, including data on the number of layered products 350 produced, processing times, and error rates.

It should also be noted that the use of the RF-tester 620 allows for real-time monitoring and adjustment of the processing parameters, ensuring that the resulting functional markings 360 meet the desired quality standards. In an embodiment, the RF-tester 620 may be interfaced with an artificial intelligence system for automated monitoring and analysis of production quality and statistics.

Overall, the various embodiments of Figure 2 present a highly flexible and efficient system for fabricating functional markings on transparent articles. By using computerized control systems and advanced laser technology, the system can rapidly and accurately apply a wide range of functional markings on various types of transparent articles, while minimizing production time and increasing production efficiency.

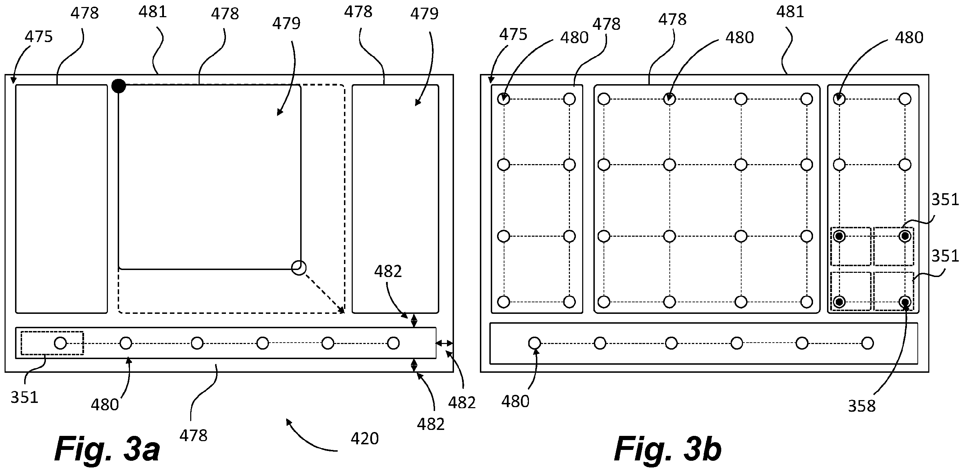

Figures 3a and 3b present various advantageous embodiments of the present disclosure. In the example of Figure 3a, there is presented a process for providing the transparent article with nesting regions 478. In an embodiment there is provided means for selecting nesting regions 478 to be assigned within an area delimited with the geometrical inputs 475 of a transparent article 201 to be processed with the production unit 150. A user interface 420 may comprise means for assigning nesting regions 478.

In an embodiment, the system 101 comprises means for selecting the layered product 350, comprising means for selecting nesting regions 478 to be assigned within an area delimited with said geometrical inputs 475, wherein, said nesting regions 478 are configured to be selected on the basis of digital widgets 479, said nesting regions 478 are configured to be filled with members of said set of said layers 351 by said system 101, and said coordinate inputs 480 are scaled in two dimensions on the basis of the filling of said nesting regions 478.

In Figures 3a and 3b, embodiments of the present disclosure are presented that are focused on the nesting and scaling of layered products 350 on transparent articles 201. In an embodiment of Figure 3a, nesting regions 478 are selected and assigned within the geometrical inputs 475 of a transparent article 201 to be processed with the production unit 150. A user interface 420 is provided for assigning the nesting regions 478. In an embodiment, the system 101 comprises means for selecting the layered product 350 and assigning the nesting regions 478 within the area delimited by the geometrical inputs 475 of the transparent article 201.

Embodiments of the present disclosure may provide means for automated nesting of layers 351 on transparent articles 201 of different sizes. The nested layers 351 may be scaled on the basis of variable selection of members of a set 352 of the layers 351 over the coating 210 of the transparent article 201 by the control unit 450. The selection of layers may be varied as a function of the coordinate inputs 480. In an embodiment, the nesting regions 478 are configured to be filled with members of the set of layers 351 by the system 101, and the coordinate inputs 480 are scaled in two dimensions on the basis of the filling of the nesting regions 478.

In an embodiment of Figure 3b, the system 101 may comprise means for selecting a layered product 350 to be fabricated on a transparent article 201 and a product database 410 configured to be interfaced with the control unit 450 of the system 101. The control unit 450 is configured for storing and retrieving entries of digital traces 361, digital surfaces 362, and beam parameter sets 380. The system 101 is configured to perform programmed operations for providing combined pairs of the entries as layers 351 to be selected on the basis of the coordinate inputs 480.

The nesting of the layers 351 on the coating 210 of the transparent article 201 may be performed by the system 101. The nested layers 351 may be scaled on the basis of the geometrical inputs 475 of the transparent article 201 and provided for positioning of at least one laser device 170 of the production unit 150 for fabricating functional markings 360 of the product 350. In an embodiment, the system 101 comprises means for scaling the layered product 350 on the coating 210 of the transparent article 201.

Overall, embodiments of Figures 3a and 3b provide for automated nesting of layered products 350 on transparent articles 201 of different sizes, while providing means for scaling and assigning nesting regions 478. The control unit 450 of the system 101 may be configured to store and retrieve entries comprising digital traces 361, digital surfaces 362, and beam parameter sets 380, and to perform programmed operations for providing combined pairs of the entries as layers 351 to be selected on the basis of the coordinate inputs 480. The nested layers 351 may be scaled on the basis of variable selection of members of the set 352 of the layers 351 over the coating 210 of the transparent article 201 by the control unit 450. The selection of layers may be varied as a function of the coordinate inputs 480.

Embodiments of the present disclosure provide a production unit 150 for fabricating functional markings 360 on transparent articles 201. The production unit 150 comprises a computerized production control system 101, which is configured for mapping layered products 350 on transparent articles 201 of varying sizes. The system 101 comprises means for automated nesting of the layers of a layered product 350 on transparent articles 201 of different sizes.

In an embodiment, the nesting of the layers 351 on the coating 210 of the transparent article 201 is performed by the system 101. The system 101 comprises means for selecting a layered product 350 to be fabricated on a transparent article 201, and a product database 410 configured to be interfaced with a control unit 450 of the system 101. The control unit 450 is configured, by programmed operations of a program code 412, for storing and retrieving entries of digital traces 361, digital surfaces 362, and beam parameter sets 380.

In an embodiment, the system 101 may be configured to perform programmed operations for providing combined pairs of the aforesaid entries as layers 351 to be selected on the basis of coordinate inputs 480. Each of said pairs comprises a member of a beam parameter set 380. The layers 351 are configured to be nested on the coating 210 of the transparent article 201 as a layered product 350 and on the basis of geometrical inputs 475 of said article 201 and to be programmatically routed 500 on the basis of said geometrical inputs 475 to fabricate said product 350 on said coating 210.

In an embodiment, the system 101 may comprise means for scaling the layered product 350 on a coating 210 of the transparent article 201. The coordinate inputs 480 are scaled on the basis of geometrical inputs 475 of the transparent article 201 and provided for positioning of at least one laser device 170 of the production unit 150 for fabricating functional markings 360 of the product 350. The nested layers 351 are configured to be scaled on the basis of variable selection of members of a set 352 of the layers 351 over the coating 210 of the transparent article 201 by said control unit 450, wherein said selection is varied as a function of said coordinate inputs 480.

In embodiments, the nesting of the layers 351 on the transparent article 201 may be performed using nesting regions. The nesting regions may be placed on a layout of the glass area, with the positioning of the regions being based on constrains 492. The constrains 492 may comprise how much tolerance is forced between some of the widget or nesting region edges and the detected or expected glass coating edge. Constraints can also define possible overlap rules of various widgets or nesting regions. The interlock between at least two nesting regions can also be defined by constraints so that the combined effect of the processed patterns (traces) expands the passband.

Embodiments of the present disclosure provide a user interface 420 for selecting the layered product 350 to be fabricated on a transparent article 201. The user interface 420 may comprise means for selecting nesting regions 478 to be assigned within an area delimited with geometrical inputs 475 of said transparent article 201. In an embodiment, the user interface 420 comprises means for displaying selectable layers 351 and means for selecting layers to be assigned within said nesting regions 478.

In an embodiment, the user interface 420 may comprise a selection application for selecting a layered product 350, which comprises one or more layers 351. The selection application may be a feature for a graphical user interface, and may be configured to display a set of layered products 350, each comprising one or more layers 351. The user interface 420 may also comprise a selection application for selecting layers 351 from a set of selectable layers, based on their respective digital traces 361 or digital surfaces 362.

In an embodiment, the user interface 420 may comprise a nesting widget 479 for assigning nesting regions 478 on a layout of the transparent article 201. The nesting widget may be configured to interact with selectable nesting regions 478, and to enable a user to select one or more nesting regions 478 and assign layers 351 to said nesting regions 478. The nesting widget may also be configured to react to constraints 492 in the assignment of layers 351 to said nesting regions 478.

In an embodiment, the user interface 420 may comprise a scaling widget 479 for scaling the layers 351 of the layered product 350 to be assigned within said nesting regions 478. The scaling widget may be configured to provide a scaling control for each layer 351, which may be based on the size and/or shape of the nesting region 478 to which said layer 351 is assigned. The scaling widget may also be configured to provide a scaling factor for the coordinate inputs 480, which may be based on the scaling factors of said layers 351.

In an embodiment, the user interface 420 may comprise means for displaying and modifying beam parameter sets 380 for the layered product 350. The user interface 420 may comprise a widget for selecting beam parameter sets 380 for each layer 351, and means for modifying said beam parameter sets 380. The user interface 420 may also be configured to display statistics and other parameters related to the production process, such as processing time, yield, and error rates.

The program code for autofilling the widgets 479 with configurable layers and constraints comprises several modules and functionalities. The code is designed to interact with the user interface 420 and the control unit 450 of the system 101.

One module of the program code may comprise means for selecting a layered product 350 and determining the nesting regions 478 to be assigned within the area delimited by the geometrical inputs 475. The code includes functionality for selecting the layers 351 to be included in the nesting regions 478 based on user input and configurable constraints.

Another module may comprise means for scaling the layered product 350 on the transparent article 201. The code includes functionality for determining the appropriate scaling factors for the nested layers 351 based on the selected layers and the geometrical inputs 475 of the transparent article 201.

The program code may also comprise a module for autofilling the nesting regions 478 with the selected layers 351. This module includes functionality for calculating the optimal placement of the layers within the nesting regions based on the selected layers, the nesting regions, and the configurable constraints.

In an embodiment, the program code may include means for automatically adjusting the selection of layers 351 and the placement of the layers within the nesting regions 478 based on feedback from the control unit 450. This functionality allows the system 101 to dynamically adjust the fabrication process based on real-time data and improve the efficiency and accuracy of the process.

Additionally, the program code may include functionality for automatically generating and storing data related to the nested layers 351 and the fabrication process. This data can include information on the selected layers, the placement of the layers within the nesting regions, the scaling factors used, and other relevant parameters. This data can be used for quality control, process optimization, and other purposes.

The properties involved in autofilling the widgets with configurable layers and constraints may comprise any of the following:
1. Input Selection: The program code first receives input data from the user interface regarding the geometrical inputs 475 of the transparent article to be processed, as well as the desired digital widgets 479. The user may select from a variety of configurable options for the layers 351 to be filled within the selected widgets 479.
2. Layer Configuration: Based on the input selection, the program code configures the layers 351 to be filled within each widget 479. This may include providing the appropriate layer parameters and spacing based on the desired functional marking 360 to be produced.
3. Nesting and Scaling: Next, the program code uses nesting and scaling algorithms to ensure that the configured layers 351 are optimally nested within the selected widgets 479, and that the layers are appropriately scaled to fit the geometrical inputs 475 of the transparent article.
4. Constraints: The program code takes into account various constraints that may affect the placement and configuration of the layers 351 within the widgets 479. These constraints may include, for example, minimum and maximum spacing requirements between adjacent layers, or the need to avoid overlap between adjacent layers or widgets.
5. Autofilling: Using the configured layers 351, nesting and scaling algorithms, and constraints, the program code automatically fills the selected widgets 479 with the appropriate layers to create a layered product 350. The autofilling process may be repeated for each selected widget 479, or for a group of widgets simultaneously, depending on the user's input.

Overall, the program code for autofilling the widgets with configurable layers and constraints allows for a highly customizable and efficient process for creating functional markings 360 on transparent articles 201. By providing users with a range of configurable options for the layers 351 and digital widgets 479, and using advanced nesting and scaling algorithms, the program code is able to optimize the placement and configuration of the layers 351 within the widgets 479 to ensure that the resulting layered product 350 is highly functional and effective. Additionally, by taking into account various constraints that may affect the placement and configuration of the layers 351, the program code ensures that the resulting product is highly precise and accurate, and that it meets the user's desired specifications.

In an embodiment of the present disclosure, the nested layers 351 may be scaled on the basis of variable selection of members of a set 352 of the layers 351 over the coating 210 of the transparent article 201. The selection may be varied as a function of the coordinate inputs 480, which are themselves based on the geometrical inputs 475 of the transparent article 201.

Scaling in the nesting process may involve varying the size and/or shape of the layers 351, and/or the spacing between the layers 351, or a dimension-based selection in a dataset that comprises plurality of selectable layers 351, based on the coordinate inputs. The scaling may be performed by the system 101, which comprises means for scaling the layered product 350 on a coating 210 of the transparent article 201. The nested layers 351 may be scaled on the basis of the selected members of the set 352 of layers 351, which are assigned to the nesting regions 478 based on the digital widgets 479.

The use of scaling in the nesting process allows for greater flexibility and efficiency in the fabrication of layered products 350 on transparent articles 201 of different sizes and shapes. By varying the size and/or shape of the layers 351 and/or the spacing between the layers 351, the system 101 can optimize the fabrication process for each specific transparent article 201, resulting in improved accuracy and consistency of the functional markings 360 on the transparent article 201.

In addition, the use of digital widgets 479 in the nesting process allows for configurable and customizable nesting of the layers 351 on the transparent article 201. The user interface 420 may comprise means for selecting the digital widgets 479, which can be customized and configured to provide specific nesting configurations for each layered product 350. The system 101 may then autofill the nesting regions 478 with the appropriate members of the set 352 of layers 351 based on the selected digital widgets 479 and the geometrical inputs 475 of the transparent article 201.

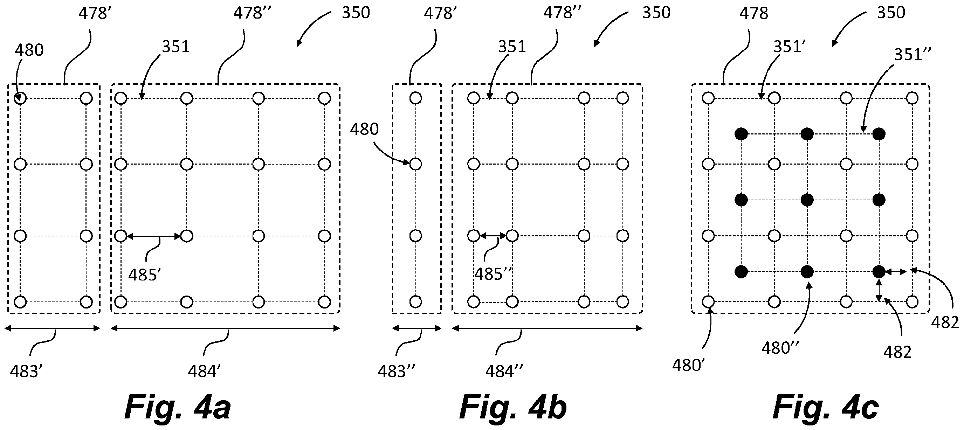

One aspect presented in Figures 3a-3b and 4a-c is the use of constraints in the nesting process. Constraints can be used to define rules for the placement of the layers within the nesting regions. For example, a constraint can be used to define a minimum distance between two adjacent traces or surfaces within a layer. This can be important in ensuring that the final product meets certain performance criteria.

Additionally, constraints can be used to specify the maximum number of layers that can be nested within a single region, or the maximum number of regions that can be used for a given product. Constraints can also be used to ensure that certain layers are always nested together or that certain layers are never nested together.

The user interface can provide a means for defining and modifying these constraints, allowing for greater flexibility in the nesting process. The system can also be configured to automatically generate constraints based on certain criteria, such as the size or shape of the nesting regions or the characteristics of the layers themselves.

In some embodiments, the system can also be configured to optimize the nesting process based on certain criteria, such as minimizing material waste or maximizing production efficiency. This can involve analyzing the available layers and nesting regions and selecting the most optimal combination based on the defined criteria.

Overall, the use of constraints and optimization algorithms can greatly enhance the efficiency and effectiveness of the nesting process, allowing for greater flexibility and customization in the production of functional markings on transparent articles.

Overall, the nesting process presented in Figures 3a and 3b represents an advantageous embodiment of the present disclosure, providing a flexible, customizable, and efficient method for fabricating functional markings 360 on transparent articles 201. The use of nesting regions, digital widgets, and scaling allows for precise and accurate fabrication of layered products 350 on transparent articles 201 of varying sizes and shapes, while the user interface and program code provide ease of use and automation for the fabrication process.

Figures 4a - 4c present various advantageous embodiments of the present disclosure.

Figures 4a and 4b illustrate the scaling functionalities in one dimension of the nesting region 478', which may be filled with an array of coordinate inputs 480. In Figure 4a, the nesting region 478' is represented with multiple vectors of coordinate inputs, while in Figure 4b, only one vector of coordinate inputs is illustrated. The scaling functionalities allow for the autofilling of fillable layers, digital patterns of traces, or digital surfaces based on the constraints defined by the widget controlling the nesting region. The autofilling may be configured to add or drop off layers as necessary.

Figure 4a also includes a layered product 350 and its layers 351, which may be selected and nested on the coating 210 of the transparent article 201. The coordinate inputs 480 may be scaled to position at least one laser device 170 of the production unit 150 for fabricating functional markings 360 of the product 350. The autofilling and nesting of layers may be subject to the forced number of vector or array elements provided by the system 101, the user, or a database entity.

Figure 4c presents an example of nested coordinate inputs of a first and a second layer within the same nesting region, which may be constrained with individual constraints. The constraints may be forced by the widget that controls the same nesting region. This figure also shows that the coordinate inputs driving the first layer and second layer nesting may not have to be the same. Additionally, Figure 4c illustrates the possibility of processing an image on the coating 210 that is larger than a single scanfield by nesting and routing the image.

Numbers 483 and 484 represent the first dimension of the first and second nesting regions, respectively. Figures 4a and 4b show the representations of these dimensions within the two nesting regions, and how they change with scaling. Figure 4a includes a representative of the scaled distance between two coordinate inputs, 485', while Figure 4b shows the same but with the scaled distance represented as 485".

Figures 4a-4c present embodiments of the present disclosure that include automated nesting of layers on transparent articles of varying sizes, with the use of scaling functionalities and autofilling of layers, digital patterns of traces, or digital surfaces. The system 101 may be configured to perform programmed operations for providing combined pairs of entries from the product database 410 as layers 351 to be nested on the coating 210 of the transparent article 201 based on the geometrical inputs 475. Additionally, Figure 4c shows the possibility of nesting multiple layers within a single nesting region and the constraints 482 that can be placed on them.

In embodiments of the present disclosure, a production lot or queue can be configured to comprise different/heterogeneous nesting arrangements. This means that a set of baseline layers/layered product can be assigned to most of the glasses to be processed, but specific identified glasses may be assigned with more specific combinations. For example, if there is a building for which the window glasses are to be produced, and one face of the building is illuminated with millimeter-wave 5G signals, then the process could be tailored to process additional third passband layers for glasses of that building face, and include only the first and second frequency range passbands to the other faces of the building. This accelerates the production speed considerably.

The system 101 can be configured to perform programmed operations for providing combined pairs of the entries of the database as layers to be selected on the basis of coordinate inputs. Each of said pairs comprises a member of a beam parameter set, and these can be selected based on the specific requirements of the glass to be processed. For example, a certain building may require additional layers to be processed, and these can be selected and assigned to specific glasses in the production lot or queue.

In an embodiment, the system 101 may comprise a production control program that is configured to receive input data related to the glass to be processed, including the requirements for the specific frequencies and passbands needed for the glass. The program can then automatically assign the appropriate layers to the specific glasses in the production lot or queue, ensuring that the glass is processed according to its specific requirements.

The user interface 420 can also be configured to allow for the selection and assignment of specific layers to individual glasses in the production lot or queue. This allows for manual control over the production process, enabling operators to assign specific layers to specific glasses based on their requirements.

In embodiments of the present disclosure, the nesting regions can be configured to vary based on the requirements of the glass to be processed. For example, the nesting regions can be designed to allow for the processing of additional layers in specific areas of the glass, while excluding those layers from other areas. This ensures that the glass is processed according to its specific requirements, without wasting time or resources on unnecessary layers.

Overall, the process of configuring a production lot or queue to comprise different/heterogeneous nesting arrangements allows for greater flexibility in the production process. This enables the system to process glasses according to their specific requirements, ensuring optimal performance and quality. The use of specific layers and nesting arrangements also helps to reduce production time and cost, as only the necessary layers are processed, rather than processing all layers for every glass.

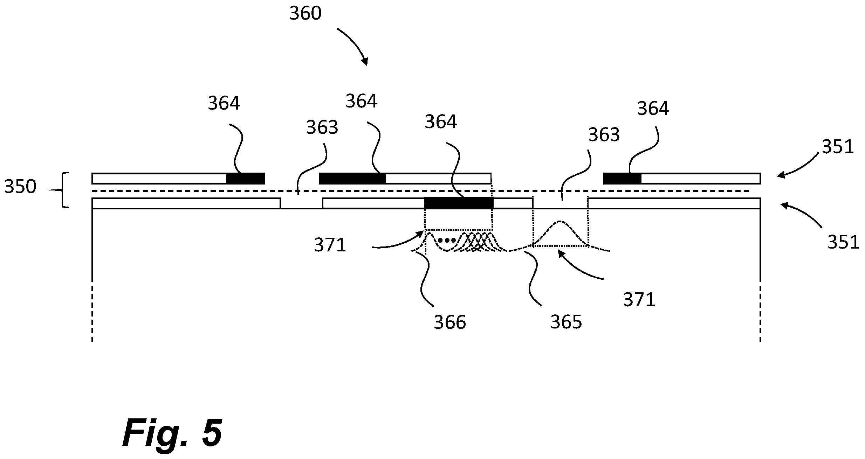

Figure 5 presents an example of a layered product 350 according to the present disclosure.

Figure 5 presents an example of a layered product 350 that has been processed on a transparent article 201. The layered product 350 of the non-restricting example includes two representatives of layers 351, which have been nested on the coating 210 of the transparent article 201. The layered product 350 may also include functional markings 360 that have been fabricated on the coating 210 using a laser device 170 of the production unit 150. The functional markings 360 may include digital traces 361 and digital surfaces 362, which are entities in the system memory or database.

In the figure, 363 and 364 represent physical marks on the coating 210 that are part of the processed layered product 350. 363 is the processed mark of a digital trace 361, while 364 is the processed mark of a digital surface 362. The digital surface 362 may be partially processed with a laser parameter set that provides a laser output in which the beam intensity remains under the ablation threshold 371 of the layer, or it may be partially processed with a laser parameter set that provides a laser output in which the beam intensity exceeds the ablation threshold 371 of the layer. The digital surface 362 may also be processed onto the coating 210 by means of various hatch patterns.

The figure also shows beam intensity profiles 365 and 366. 365 represents the beam intensity profile for a digital trace 361, with respect to an ablation threshold 371. 366 represents the beam intensity profile for a digital surface 362, with respect to an ablation threshold 371.

An example of the surface 280 is shown in which the beam intensity profiles 365 may be subjected to, in plasma welding of material from said surface 280 on a surface of the transparent article 201 by the effect of marking the layered product on said surface 280 through said transparent article 201.

The processing of the layered product 350 on the transparent article 201 may involve the use of various laser parameter sets, which may be stored in a beam parameter set database 380. The laser device 170 may be configured to provide laser output based on the selected laser parameter set, and the output may be controlled using a control unit 450 of the system 101.

In an alternative embodiment, the ablation may be made through the glass so that another layer above that may remain unprocessed. This can be achieved by selecting a laser parameter set that provides a laser output in which the beam intensity remains under the ablation threshold of the layer(s) above the layer being processed. The ablation threshold for the layer(s) above may vary depending on the material and thickness of the layer(s). By controlling the laser output and selecting the appropriate laser parameter set, the system 101 can process the layer(s) below the unprocessed layer(s) without damaging the layer(s) above. This alternative embodiment allows for the fabrication of functional markings on a transparent article without having to remove the layer(s) above the processed layer(s), thereby reducing production time and cost.

In the embodiment illustrated by Figure 5, the laser beam or laser device used to process the coating is configured such that it does not damage the glass article, but effectively processes the coating. The laser wavelength used in the processing may be selected to correspond to a frequency range at which the glass article is substantially transparent, so as to avoid damaging the glass.

Additionally, the laser beam may be configured to have a specific beam profile or intensity profile, as shown by 365 and 366. The beam intensity profile for a digital trace 363 may be configured to remain below the ablation threshold 371, while the beam intensity profile for a digital surface 364 may exceed the ablation threshold in certain areas, as needed for the specific processing requirements. This allows for precise control over the processing of the coating, ensuring that it is performed in a controlled and efficient manner.

Furthermore, the processing of the digital surface 364 may be performed using various hatch patterns, as needed for the specific application. These hatch patterns may be selected based on the geometry of the digital surface 362 and the desired processing outcomes. This provides a high degree of flexibility in the processing of the coating, allowing for customized and optimized processing for each specific application.

In some embodiments, the system may be configured to perform additional processing steps, such as post-processing to further enhance the functional properties of the processed coating. For example, the coating may be subjected to a heat treatment or other processing steps to further modify its properties and enhance its performance. These additional processing steps may be controlled by the system and integrated into the overall processing workflow.

Finally, as mentioned earlier, in an alternative embodiment, the ablation may be made through the glass so that another layer above that may remain unprocessed. This may be achieved by selecting a laser wavelength and intensity profile that is optimized for processing through the glass layer, while avoiding damage to the layer(s) above it. This provides a high degree of flexibility and control over the processing of the coating, allowing for customized and optimized processing for each specific application.

In one embodiment, the present disclosure provides a method for fabricating a bird-friendly layered product 350 that includes at least one nesting region 478 with bird-friendly layers 351. The bird-friendly layers 351 are formed by pairing at least one digital surface 362 with at least one beam parameter set 380. The program code 412 is programmed to receive instructions for fabricating the bird-friendly layered product 350.

In order to make the bird-friendly layers 351, laser radiation having a wavelength in the range of about 800-2000 nm may be provided. This laser radiation may be configured to mark visible regions within the digital surface 362. Importantly, the pulse energy of the laser radiation may remain below the ablation threshold of the coating to form the bird-friendly layers 351. In other words, the laser beam or laser device may be configured in such a way that it does not damage the glass article but processes only the coating.

The nesting region 478, in which the bird-friendly layers 351 are formed, may be configured to comprise a spectral reflectance modulation in the range of about 200-1100 nm. This allows for the formation of visible markings that are both visible to the human eye and to birds, thereby making the layered product bird-friendly. The program code 412 is programmed to receive instructions for the fabrication of the bird-friendly layered product 350, including the selection of the nesting region 478 and the pairing of the digital surface 362 with the beam parameter set 380.

Overall, the present disclosure provides a method for fabricating bird-friendly layered products 350 that includes the use of laser radiation with a specific wavelength range and pulse energy to form the bird-friendly layers 351. The program code 412 is programmed to receive instructions for the fabrication of the bird-friendly layered product 350, which includes the selection of the nesting region 478 and the pairing of the digital surface 362 with the beam parameter set 380. The nesting region 478 has a spectral reflectance modulation in the range of about 200-1100 nm, which allows for the formation of visible markings that are both visible to the human eye and to birds.

Birds have different visual capabilities than humans, including the ability to see into the ultraviolet range of the electromagnetic spectrum. The bird-friendly surface can be designed to have a spectral reflectance modulation that is visible to birds in the UV and visible light wavelengths. By modulating the surface reflection in this range, the markings become visible to the avian eye, while remaining transparent to human eyes. This can be achieved by adding specific materials or coatings to the surface of the glass, which interact with UV and visible light to create the desired spectral reflectance modulation.

The spectral reflectance modulation can be in the range of about 200-1100 nm, which is the range of wavelengths that is visible to both birds and humans. The goal is to create markings on the glass that are visible to birds, but not distracting or obstructive to human vision. By using a laser beam with a pulse energy that remains below the ablation threshold of the coating, the markings can be formed on the glass surface without damaging the glass itself.

Grating effects may be advantageously configured to provide three-dimensional effects for visually obtrusive patterns for birds by using various hatching patterns 355.

In an embodiment, the digital surface 362 comprises a plurality of hatching regions wherein said hatch is configured to provide reflective or transmissive diffraction gratings affecting the spectral reflectance modulation in the range of 200-1100 nm to form visible markings to the human eye and to birds' eyes. In an embodiment, the hatching patterns 355 comprise a plurality of hatching regions that are arranged as a first, a second, and a third side of a graphical object.

In an embodiment, the hatching patterns 355 are arranged to modulate the reflection of colors from the coating 210.

In an embodiment, the hatching patterns 355 are arranged to provide visually observable colors from an optically transparent coating 210.

In an embodiment, the graphical object is arranged to represent a three-dimensional object with a plurality of faces.

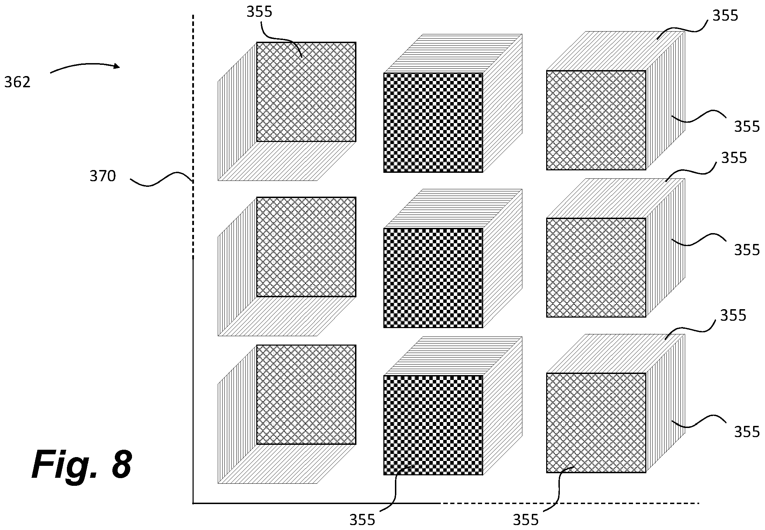

Without limiting to the limited number of exemplary graphical patterns shown in Figure 8, there is provided an example of heterogeneous hatching patterns 355 of the digital surface 362. Said patterns are arranged to represent three-dimensional objects with plurality of faces, wherein the diffraction gratings of each face are arranged to modulate the surface reflection of sunlight such that the faces appear to have a different color.

In an embodiment, the faces of the graphical object are arranged to represent a three-dimensional object with a plurality of faces.

In an embodiment, the faces are provided with heterogeneous hatching patterns 355 that are arranged to modulate spectral reflectance in the range of 200-1100 nm wavelengths.

In an embodiment, the hatching patterns 355 are arranged to create heterogeneous periodic structures that are configured to provide spectral reflectance modulation at two differing reflection coefficients in the range of 200-1100 nm.

In an embodiment, the hatching patterns 355 comprise a plurality of hatching regions that are arranged as a first, a second, and a third side of a graphical object, wherein said regions are arranged with heterogeneous hatching patterns 355 such that at least two of said patterns are arranged to create diffraction gratings for two crossing polarizations in the range of 200-1100 nm.

In an embodiment, the hatching patterns 355 comprise a plurality of hatching regions that are arranged as at least two regions, wherein said regions are arranged with heterogeneous hatching patterns 355 such that said at least two patterns are arranged to create heterogeneous periodic structures that are configured to provide spectral reflectance modulation for two crossing polarizations in the range of 200-1100 nm.

In an embodiment, the hatching patterns 355 comprise a plurality of hatching regions that are arranged as at least two regions, wherein said regions are arranged with heterogeneous hatching patterns 355 such that said at least two patterns are arranged to create heterogeneous periodic structures that are configured to provide spectral reflectance modulation at two differing reflection coefficients in the range of 200-1100 nm.

In an embodiment, the hatching patterns 355 comprise a plurality of hatching regions that are arranged as a first, a second, and a third side of a graphical object, wherein said regions are arranged with heterogeneous hatching patterns 355 such that at least two of said patterns are arranged to create heterogeneous periodic structures that are configured to provide spectral reflectance modulation at two differing polarizations in the range of 200-1100 nm.

In an embodiment, the hatching patterns 355 comprise a plurality of hatching regions that are configured to provide spectral reflectance modulation for sunlight in the range of 200-1100 nm, wherein said modulation is provided by altering the density of the periodic structure of the diffraction gratings.

In an embodiment, the hatching patterns 355 comprise a plurality of hatching regions that are configured to provide spectral reflectance modulation for sunlight in the range of 200-1100 nm, wherein said modulation is provided by altering the weight of the periodic structure of the diffraction gratings.

Overall, the bird-friendly surface is designed to provide a safe and effective solution for reducing bird collisions with glass buildings and structures. By incorporating spectral reflectance modulation into the surface of the glass, the markings become visible to birds, while remaining unobtrusive to human vision. This can help to reduce the risk of bird collisions, while also providing an aesthetically pleasing and environmentally responsible solution for architectural design.

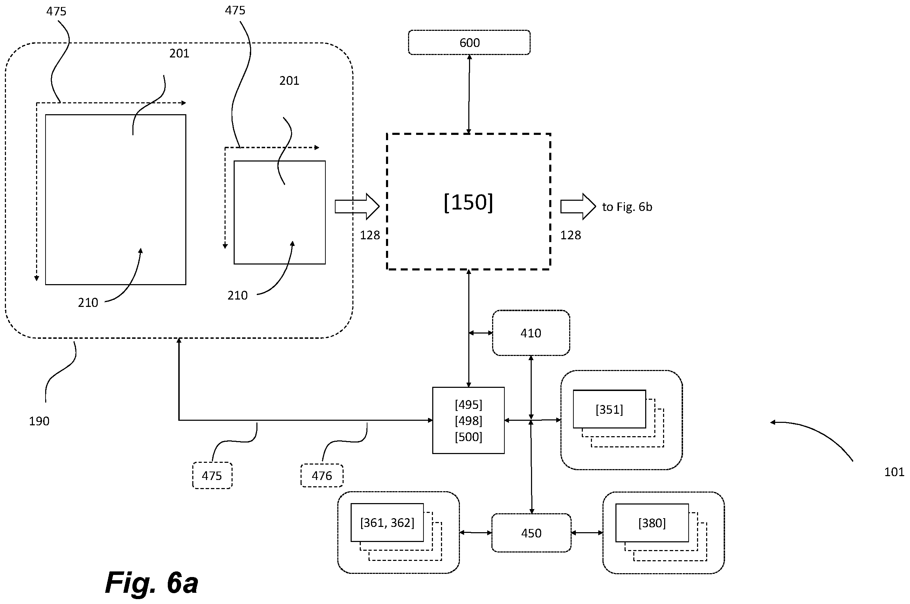

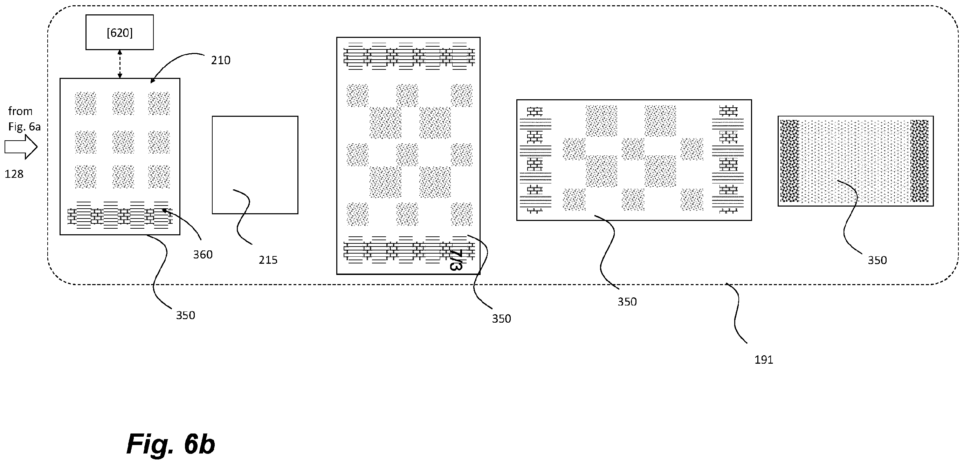

Figures 6a and 6b present an example of a process for providing transparent articles according to the present disclosure. There is provided the production unit 150 for fabricating the functional markings 360 on transparent articles 201, in a fabrication of varying article sizes of the transparent articles 201.

Figures 6a and 6b illustrate an example of a process according to the present disclosure in operation. Figure 6a illustrates process steps for preparing the output batch and Figure 6b illustrates process steps of the output patch.

An input batch 190 consisting of unprocessed glass articles is fed into the production unit 150 for processing. The production unit 150 comprises a computerized production control system 101, which maps the layered products 350 onto the transparent articles 201 of varying sizes.

The system 101 is programmed to receive and process input data related to digital traces 361, digital surfaces 362, and beam parameter sets 380. A product database 410 is interfaced with a control unit 450 of the system 101 for storing and retrieving entries of digital traces 361, digital surfaces 362, and beam parameter sets 380.

In the production unit 150, the transparent articles 201 are processed to form the layered products 350, which comprise a unique combination of layers and layer sets. The geometrical inputs 475 of the transparent articles 201 vary, and the system 101 is operable to accommodate varying article sizes, including large jumbo glasses.

In an embodiment, the system 101 may be configured to identify and skip articles 215 that are not to be provided with a layered product 350. The skipped article 215 is identified by the system 101 and not processed as it travels through the production unit 150.

The output batch 191 may consist of a series of transparent articles that have been processed to form the layered products 350. The layered products 350 are mapped onto the transparent articles 201 by the control unit 450 based on the programmed operations of the system 101. The system 101 is configured for automated nesting of the layers 351 of the layered product 350 on transparent articles 201 of different sizes.

The production unit 150 may comprise means for selecting a layered product 350 to be fabricated on a transparent article 201, wherein said layered product 350 comprises at least one nesting region 478 with a unique combination of layers 351. The nesting regions 478 are configured to be selected on the basis of digital widgets 479, and the layers 351 are configured to be filled with members of the set of layers 351 by said system 101.

In an embodiment, the production unit 150 may be configured to process large jumbo glasses that each have identical dimensions. The system 101 is still very fast and allows various ways to make versatile production variants.

The present disclosure provides a highly efficient and versatile production system for fabricating functional markings 360 on transparent articles 201. The system 101 is programmed to receive instructions for fabricating a bird-friendly layered product 350, comprising at least one nesting region 478 with bird-friendly layers 351. The nesting region 478 has a spectral reflectance modulation in the range of about 200-1100 nm to form visible markings to the human eye and to birds.

In summary, Figure 6 illustrates the efficient and versatile operation of the present disclosure in a production unit 150. The system 101 provides the means for selecting and mapping the layered products 350 onto the transparent articles 201 of varying sizes, with the capability of skipping articles 215 that are not to be processed. The production unit 150 is also operable to process large jumbo glasses with similar dimensions. The bird-friendly layered product 350 comprises at least one nesting region 478 with bird-friendly layers 351, which have a spectral reflectance modulation to form visible markings to the human eye and to birds.

Input batch 190 comprising a series of unprocessed glass articles is provided to 150 for production. These articles may have varying dimensions provided as geometrical inputs 475. In an embodiment, the system 101 may comprise means to identify 476 the glass position by an automatized procedure.

The system 101 maps the layered products 350 on the transparent articles 201 of varying sizes. The system 101 may comprise means for automated nesting of the layers of a layered product 350 on transparent articles 201 of different sizes.

The system 101 may select a layered product 350 to be fabricated on a transparent article 201 based on the programmed operations of the control unit 450. The product database 410 is configured to be interfaced with the control unit 450 of the system 101.

The system 101 processes the selected layered product 350 on the transparent article 201. The processing may involve using laser radiation having a wavelength in the range of about 800-2000 nm, and the pulse energy of the laser radiation may remain below the ablation threshold of the coating in forming of the bird-friendly layers.

The system 101 receives a series of transparent articles assigned for processing as an input batch 190. The transparent articles may have varying dimensions provided as geometrical inputs 475. The system 101 outputs a series of transparent articles that have been processed in an output batch 191.

The system 101 may be configured to identify articles 210 that are not to be provided with a layered product 350, when they travel by the production unit 150. These articles may be marked as skipped articles 215.

The system 101 is operable for varying article sizes, including jumbo glasses that have identical dimensions. The system 101 maps the layered products 350 on these glasses and performs the processing of the selected layered product 350 using the same nesting process as with smaller articles.

The system 101 comprises means for selecting a layered product 350 to be fabricated on a transparent article 201. The system 101 may be configured to perform programmed operations for providing combined pairs of the entries of digital traces 361, digital surfaces 362, and beam parameter sets 380 as layers 351 to be selected on the basis of coordinate inputs 480.

The system 101 may be configured to perform programmed operations for providing nesting regions 478 to be assigned within an area delimited with the geometrical inputs 475 of a transparent article 201 to be processed with the production unit 150. The system 101 comprises a user interface 420 comprising means for assigning nesting regions 478.

The system 101 may be configured to perform programmed operations for providing a layered product 350 with bird-friendly layers 351, wherein said bird-friendly layers 351 are formed by pairing at least one digital surface 362 with at least one beam parameter set 380, and said nesting region 478 has a spectral reflectance modulation in the range of about 200-1100 nm to form visible markings to the human eye and to birds.

The marking process can be an on-the-fly process, meaning that it can be performed continuously as the glass articles are being conveyed through the production unit. The system can be configured to receive input signals from sensors or other detection devices that identify the presence and location of the glass articles as they move through the production unit.

Based on these input signals, the system can automatically generate the appropriate marking patterns and laser parameters for each glass article, and perform the marking process in real-time as the article passes through the production unit. This allows for high-speed and efficient production of large quantities of marked glass articles.

Additionally, the system can be configured to adjust the marking patterns and laser parameters in real-time based on feedback from sensors or other detection devices that monitor the quality of the markings. This ensures that the markings are consistent and of high quality, and minimizes the need for manual intervention and inspection.

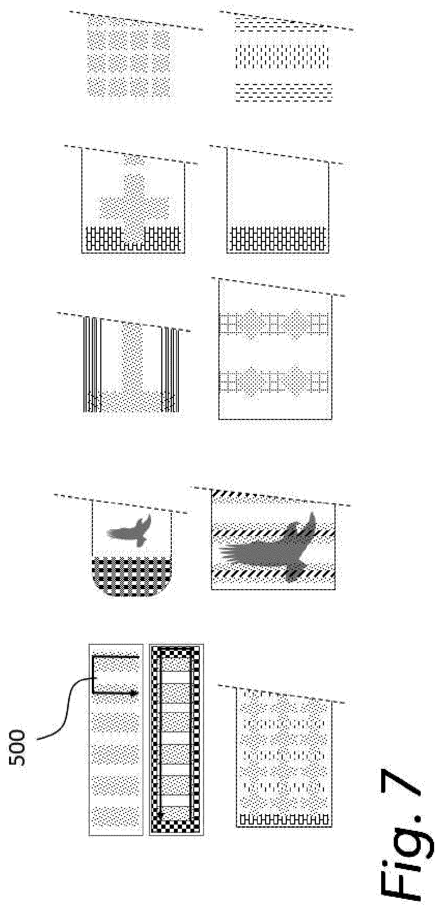

Figure 7 presents examples of various products fabricated according to a process of the present disclosure. Figure 7 presents various examples of articles that have been processed by the system 101 and production unit 150. The examples include transparent articles with different dimensions and orientations, various combinations of nesting regions, pass-band regions, and bird surfaces.

The bird surfaces are designed to be bird-friendly and may be provided in various forms. Some of the bird surfaces are graphical images representing birds of prey, which further discourage birds from colliding with the glass. These images may be larger than a single scanfield and can be processed using the routing provided by the system. The surfaces may be colored upon specific needs by means of the unit 150.

The bird surfaces may also be provided in traditional forms such as circles, spheres, and lines. The surface modulation of the reflections at the 200-1100 nm spectrum range provides a visual signal that is visible to birds and helps them to detect the presence of the glass and avoid collisions.

The production unit 150 is designed to process a wide range of transparent articles, including those with non-standard dimensions and orientations. The system 101 is capable of mapping the layered products 350 onto transparent articles 201 of varying sizes and shapes.

The examples presented in Figure 7 demonstrate the versatility of the system and the production unit. By processing a variety of transparent articles with different dimensions and nesting regions, the system can produce a range of different products that meet specific requirements.

Overall, Figure 7 provides examples of how the present disclosure can be applied to produce a range of transparent articles with bird-friendly surfaces. The bird surfaces are designed to reduce bird collisions with glass, and the system and production unit are designed to be versatile and adaptable to different product requirements.

In an embodiment, the fabrication process may comprise at least a first series of displacement steps and a second series of displacement steps between two heterogeneous layers assigned to a scanfield, wherein said first series is configured to provide a first passband of a first range and said second series is configured to provide a second passband of a second range, wherein said displacements are configured to be less than a half of a wavelength at their respective frequencies.

Figure 8 presents an example of a digital surface 362 with various examples of hatch patterns 355 according to the present disclosure.

In an embodiment, the present disclosure provides a method for providing visually obtrusive patterns for birds so that birds don't collide with the glass treated coating. The method includes using laser ablated diffraction gratings on the digital surface 362 with various examples of hatch patterns 355 according to the present disclosure.

In an embodiment, the hatching patterns 355 comprise a plurality of hatching regions that are arranged as a first, a second, and a third side of a graphical object. The graphical object is arranged to represent a three-dimensional object with a plurality of faces. The hatching patterns 355 are arranged to modulate the reflection of colors from the coating 210 and to provide visually observable colors from an optically transparent coating 210.

In an embodiment, the faces of the graphical object are arranged to represent a three-dimensional object with a plurality of faces. The faces are provided with heterogeneous hatching patterns 355 that are arranged to modulate spectral reflectance in the range of 200-1100 nm wavelengths.

In an embodiment, the hatching patterns 355 are arranged to create heterogeneous periodic structures that are configured to provide spectral reflectance modulation at two differing reflection coefficients in the range of 200-1100 nm. Additionally, the hatching patterns 355 comprise a plurality of hatching regions that are arranged as at least two regions, wherein said regions are arranged with heterogeneous hatching patterns 355 such that said at least two patterns are arranged to create heterogeneous periodic structures that are configured to provide spectral reflectance modulation for two crossing polarizations in the range of 200-1100 nm.

In an embodiment, the hatching patterns 355 comprise a plurality of hatching regions that are configured to provide spectral reflectance modulation for sunlight in the range of 200-1100 nm, wherein said modulation is provided by altering the density of the periodic structure of the diffraction gratings. Additionally, the hatching patterns 355 comprise a plurality of hatching regions that are configured to provide spectral reflectance modulation for sunlight in the range of 200-1100 nm, wherein said modulation is provided by altering the weight of the periodic structure of the diffraction gratings.

In an embodiment, the system 101, production unit 150, and other embodiments of the present disclosure can be used to provide the bird layers by the presented nesting methods. The hatching patterns 355 may be configured to provide three-dimensional effects for visually obtrusive patterns for birds by using various hatching patterns 355. The digital surface 362 comprises a plurality of hatching regions wherein said hatch is configured to provide reflective or transmissive diffraction gratings affecting the spectral reflectance modulation in the range of 200-1100 nm to form visible markings to the human eye and to birds' eyes.

The program code 412 may also be programmed to receive instructions of fabricating a layered product comprising at least one nesting region with bird-friendly layers that are formed by pairing at least one digital surface with at least one beam parameter set, wherein the nesting regions have different spectral reflectance modulations to provide different bird-friendly markings.

In an embodiment, the production unit 150 according to the present disclosure, is characterized in that the program code 412 is configured to select a digital surface 362 for the bird-friendly layers 351 with a hatch pattern, wherein said hatch pattern comprises a plurality of intersecting lines or crosshatching.

The production unit 150 according to the present invention is, characterized in that the program code 412 is configured to select a beam parameter set 380 representative of laser radiation having a wavelength between 800 and 2000 nm, and wherein said laser radiation is configured to mark visible regions within the digital surface 362, wherein the pulse energy of said laser radiation remains below the ablation threshold of the coating 210 to form the bird-friendly layers 351.

In an embodiment, the program code 412 of the present invention may further be configured to select a digital surface for the bird-friendly layers that has a hatch pattern, which can comprise intersecting lines or crosshatching. This hatch pattern can be used to create visible markings that are more appealing to birds.

In an embodiment, the program code 412 may be configured to select a beam parameter set representative of laser radiation with a wavelength between 800 and 2000 nm, which is optimal for marking visible regions within the digital surface to create the bird-friendly layers. The pulse energy of the laser radiation remains below the ablation threshold of the coating to form the bird-friendly layers without damaging the coating.

In an embodiment of the present invention, the nesting regions 478 may be thought of as widgets 479, wherein said widgets 479 are computerized objects that enclose a surface area and that are configured to be snapped within a perimeter 481 defined by a layout representative of an article 201 to be processed, and wherein said snapping is configured to be a programmatically performed operation for constraining said widget with an edge said perimeter 481 on the basis of a pre-defined constraint 482.

In one aspect of the present invention, the nesting regions 478 may be considered as digital widgets 479. These widgets 479 are computerized objects that enclose a specific surface area and are designed to automatically align themselves within a defined perimeter 481 that corresponds to the layout of an article 201. This snapping feature is a programmatically-enabled operation that constrains the widget with the perimeter's edges.

As an embodiment of the present invention, the nesting regions 478 may be viewed as software widgets 479. These widgets are digital objects that enclose a surface area and can be precisely positioned within a perimeter 481 that is representative of the layout of an article 201 to be processed. The snapping functionality is a programmatically-executed operation that constrains the widget 479 to the perimeter's edges.

A graphical user interface 420 may be provided for defining, updating, or varying the widgets 479, constraints 482, and layout or perimeter 481 of the computerized representative of an article 201. In one embodiment of the present invention, the nesting regions 478 may be implemented as widgets within the graphical user interface 420. These widgets are digital objects that enclose a specific surface area and are designed to snap to the edges of a defined perimeter 481 that corresponds to the layout of the article 201. The snapping feature is a programmatically-enabled operation that constrains the widget 479 within the perimeter's edges.

The present invention may provide a graphical user interface 420 for configuring and updating the widgets 479, constraints 482, and article 201 layout or perimeter 481. The nesting regions 478 may be represented as digital widgets within the graphical user interface 420. These widgets are objects that enclose a specific surface area and can be precisely positioned and constrained within the defined perimeter 481 that corresponds to the article 201 layout. The snapping feature is a programmatically-executed operation that enables the widgets to automatically align with the perimeter's edges.

In one embodiment, the nesting regions 478 may be defined as logical or coordinated regions, represented by widgets 479, that guide the nesting of selected layers 351. These widgets 479 may be defined with a mathematical algorithm that specifies the coordinates of the region and its size relative to the article 201 layout. The algorithm may also include instructions for the snapping operation, which programmatically constrains the layers 351 within the widget's 479 boundary.

The nesting regions 478 can be represented by widgets 479, which are not necessarily visual objects or drawn boundaries. Instead, they may be logical regions defined with a program code that includes an algorithm for specifying the coordinates and size of the region relative to the article 201 layout. The algorithm may also include instructions for the snapping operation, which automatically constrains the selected layers 351 within the widget's 479 boundaries.

To guide the nesting of selected layers 351 within the article 201 layout, the present invention may use widgets 479 that are defined with a mathematical algorithm or program code. These widgets 479 are logical regions that specify the coordinates and size of the nesting region relative to the article 201 layout. The algorithm may also include instructions for the snapping operation, which programmatically constrains the layers 351 within the widget's 479 boundary. This approach may allow for greater flexibility and accuracy in the nesting process, as the widgets 479 can be customized to fit the specific requirements of the article 201 layout and the layered product 350.

In an embodiment of the disclosure, the coordinate inputs 480 comprise waypoints for the at least one laser device 170.

In an embodiment of the disclosure, the coordinate inputs 480 comprise waypoints that are used by a computerized program for adjusting the beam deflection of the at least one laser device 170.

In an embodiment of the disclosure, the coordinate inputs 480 comprise waypoints for a computerized program that is configured to control the movement of the displacement unit 160.

In an embodiment of the disclosure, the displacement steps may be provided by means of sliding control, wherein said sliding control comprises a computerized program that is configured to provide on-the-fly marking of the layered product 350.

In an alternative embodiment, the system for producing coated glass articles may be configured to receive outputs of an artificial intelligence (Al), supervised or unsupervised computational model or an algorithm that analyzes bird flight patterns to determine the optimal placement of bird-repellant graphics on the glass articles.

In an alternative embodiment, the system for producing coated glass articles may be combined with a solar panel manufacturing system to produce glass articles with both bird-friendly coatings and transparent solar energy harvesting capabilities with solar energy harvesting units that are transparent for visible light wavelengths.

In an alternative embodiment, the system for producing coated glass articles may be combined with a smart home technology system to produce glass articles that change their level of reflectivity based on environmental conditions, such as the time of day or year or temperature.

In an embodiment, the system 101 may be configured to be controlled by an AI algorithm that is configured to learn from existing successful layered product designs and apply this knowledge to generate new layer inputs for a given glass article.

In an embodiment, an AI algorithm may be configured to analyze the optical properties of a given glass article and generate layer inputs that adjust the contrast and visibility of any markings or patterns that are applied to the glass surface.

In an embodiment, an AI algorithm may be configured to analyze the composition of the coating materials used in a layered product and optimize the layer inputs to adjust the beam parameter set composition.

In an embodiment, an AI algorithm may be configured to analyze customer preferences and feedback to generate layer inputs that are tailored to specific market segments or applications.

In an embodiment, an AI algorithm may be configured to use data from sensors or other sources to monitor the performance of existing layered products and generate layer inputs that optimize performance based on this data.

There is provided a variation of the present disclosure that uses a combination of holographic and laser-based technology to create bird-friendly layered products with highly intricate and detailed designs that are visible to both humans and birds.

There is provided a variation of the present disclosure that uses machine learning algorithms to analyze bird migration patterns and create bird-friendly layered products with specific designs that are tailored to the migration patterns of local bird populations.

There is provided a variation of the present disclosure that incorporates solar panel technology into the layered products to create self-sustaining bird-friendly windows that generate electricity while also providing protection for birds.

There is provided a variation of the present disclosure that uses a combination of nano-coatings and laser technology to create bird-friendly layered products that are completely transparent to the human eye, but reflect UV and visible light in patterns that are visible to birds.

In the following, alternative embodiments of the production unit according to the present invention are described.

In an embodiment of the disclosure, there is provided a production unit 150 for fabricating functional markings 360 on transparent articles, comprising a computerized production control system 101 configured to map layered products 350 onto articles of varying sizes. The system 101 includes a product database 410 that stores and retrieves layers 351 comprising digital traces 361, digital surfaces 362, and beam parameter sets 380, and a program code 412 that is operated by a control unit 450 to select layers 351 for nesting on a coating 210 of an article 201 and perform variable selection of members of a set 352 of said layers 351 within constrained nesting regions 478, using coordinate inputs 480 scaled by the program code 412.

In an embodiment of the disclosure, there is provided a production unit 150 for fabricating functional markings 360 on transparent articles, comprising a computerized production control system 101 configured to map layered products 350 onto articles of varying sizes. The system 101 includes a product database 410 that stores and retrieves layers 351 comprising digital traces 361, digital surfaces 362, and beam parameter sets 380, and a program code 412 that is operated by a control unit 450 to select layers 351 for nesting on a coating 210 of an article 201 and perform variable selection of members of a set 352 of said layers 351 within constrained nesting regions 478, using coordinate inputs 480 scaled by the program code 412. The program code 412 may use a variety of algorithms and criteria to determine which layers to select and how to scale the coordinate inputs 480 to achieve the desired nesting configuration. For example, the program code 412 may be configured to consider factors such as scanfield parameters, beam parameters, and other properties of the layers and articles being processed, and may be configured to adjust the scaling of the coordinate inputs 480 accordingly.

In an embodiment of the disclosure, there is provided a production unit 150 for fabricating functional markings 360 on transparent articles, comprising a computerized production control system 101 configured to map layered products 350 onto articles of varying sizes. The system 101 includes a product database 410 that stores and retrieves layers 351 comprising digital traces 361, digital surfaces 362, and beam parameter sets 380, and a program code 412 that is operated by a control unit 450 to select layers 351 for nesting on a coating 210 of an article 201 and perform variable selection of members of a set 352 of said layers 351 within constrained nesting regions 478, using coordinate inputs 480 scaled by the program code 412. The nesting regions 478 may be defined using mathematical algorithms or other software tools that specify the coordinates and size of the regions relative to the article 201 layout. The program code 412 may use these algorithms to automatically snap the layers 351 to the edges of the nesting regions 478 and constrain their positions within the regions 478, using the variable selection process to optimize the nesting configuration for the given set of layers and article size.

In an embodiment of the disclosure, there is provided a production unit 150 for fabricating functional markings 360 on transparent articles, comprising a computerized production control system 101 configured to map layered products 350 onto articles of varying sizes. The system 101 includes a product database 410 that stores and retrieves layers 351 comprising digital traces 361, digital surfaces 362, and beam parameter sets 380, and a program code 412 that is operated by a control unit 450 to select layers 351 for nesting on a coating 210 of an article 201 and perform variable selection of members of a set 352 of said layers 351 within constrained nesting regions 478, using coordinate inputs 480 scaled by the program code 412 and a layer reference 358 to align the layers 351 on the scaled coordinate inputs 480

In an embodiment of the disclosure, the layer reference 358 represents a coordinate location, such as an origin, that is used to align, place, or locate the layers 351 on the scaled coordinate inputs 480 relative to the article 201 layout. The program code 412 may use a variety of algorithms and criteria to determine the optimal placement of the layers 351 within the nesting regions 478 based on the layer reference 358 and other factors such as the constraints 482. The program code 412 may automatically snap the layers 351 to the edges of the nesting regions 478 and constrain their positions within the regions 478 to achieve the desired nesting configuration for the given set of layers and article size.

In the following, alternative embodiments of the system according to the present invention are described.

In an embodiment of the disclosure, there is provided a computerized production control system 101 that is configured to map layered products 350 onto articles of varying sizes. The system 101 includes a product database 410 that stores and retrieves layers 351 comprising digital traces 361, digital surfaces 362, and beam parameter sets 380. The system 101 also includes a program code 412 that is operated by a control unit 450 to select layers 351 for nesting on a coating 210 of an article 201 and perform variable selection of members of a set 352 of said layers 351 within constrained nesting regions 478, using coordinate inputs 480 scaled by the program code 412 and a layer reference 358 to align the layers 351 on the scaled coordinate inputs 480.

In an embodiment of the disclosure, there is provided a computerized production control system 101 that is configured to fabricate functional markings 360 on transparent articles 201 using a laser device 170. The system 101 includes a product database 410 that stores and retrieves layers 351 comprising digital traces 361, digital surfaces 362, and beam parameter sets 380. The laser device 170 is programmed to selectively ablate material from the transparent article 201 to create the desired functional markings 360, according to the parameters specified in the beam parameter sets 380 and the digital traces 361. The system 101 also includes a program code 412 that is operated by a control unit 450 to manage the fabrication process and ensure the quality and consistency of the functional markings 360 as a part of the produced representative of the layered product 350.

In an embodiment of the disclosure, there is provided a computerized production control system 101 that is configured to process transparent articles 201 using at least one laser device 170. The system 101 includes a product database 410 that stores and retrieves layers 351 comprising digital traces 361, digital surfaces 362, and beam parameter sets 380. The laser device 170 is configured to selectively ablate material from the transparent article 201 according to the beam parameters specified in the beam parameter sets 380, in order to create the desired functional markings 360. The system 101 also includes a program code 412 that is operated by a control unit 450 to manage the processing of the transparent articles 201 and ensure the accuracy and precision of the laser ablation process.

In an embodiment of the disclosure, there is provided a computerized production control system 101 that is configured to optimize the use of at least one laser device 170 in processing transparent articles 201. The system 101 includes a product database 410 that stores and retrieves layers 351 comprising digital traces 361, digital surfaces 362, and beam parameter sets 380. The laser device 170 is configured to selectively ablate material from the transparent article 201 according to the beam parameters specified in the beam parameter sets 380, in order to create the desired functional markings 360. The system 101 also includes a program code 412 that is operated by a control unit 450 to manage the use of the laser device 170 and ensure that it is being used efficiently and effectively to process the transparent articles 201.

In an embodiment of the disclosure, there is provided a computerized production control system 101 that is configured to automate the process of selecting and processing layers 351 for creating functional markings 360 on transparent articles 201 using at least one laser device 170. The system 101 includes a product database 410 that stores and retrieves layers 351 comprising digital traces 361, digital surfaces 362 and beam parameter sets 380. The laser device 170 is programmed to selectively ablate material from the transparent article 201 according to the parameters specified in the beam parameter sets 380 to create the desired functional markings 360. The program code 412 is operated by a control unit 450 to select the layers 351 for processing, based on the desired functional markings 360 to be created, and manage the process of laser ablation using the selected layers 351 and beam parameter sets 380. The system 101 may also include sensors and feedback mechanisms to monitor and adjust the laser ablation process in real-time, to ensure the quality and consistency of the functional markings 360 on the transparent articles 201
In the following, alternative embodiments of the laser device according to the present invention are described.

In an embodiment of the disclosure, there is provided at least one laser device 170 of a production unit 150 configured to fabricate functional markings 360 on transparent articles 201, wherein said laser device 170 is programmed to selectively ablate material from the transparent article 201 according to beam parameters specified in a product database 410, and is controlled by a computerized production control system 101 including a program code 412 that is operated by a control unit 450 to manage the fabrication process and ensure the quality and consistency of the functional markings 360.

In an embodiment of the disclosure, there is provided at least one laser device 170 of a production unit 150 configured to process transparent articles 201, wherein said laser device 170 is programmed to selectively ablate material from the transparent article 201 according to beam parameters specified in a product database 410, and is controlled by a computerized production control system 101 including a program code 412 that is operated by a control unit 450 to manage the processing of the transparent articles 201 and ensure the accuracy and precision of the laser ablation process.

In an embodiment of the disclosure, there is provided at least one laser device 170 of a production unit 150 configured to optimize the use of the laser device 170 in processing transparent articles 201, wherein said laser device 170 is programmed to selectively ablate material from the transparent article 201 according to beam parameters specified in a product database 410, and is controlled by a computerized production control system 101 including a program code 412 that is operated by a control unit 450 to manage the use of the laser device 170 and ensure that it is being used efficiently and effectively to process the transparent articles 201.

In an embodiment of the disclosure, there is provided at least one laser device 170 of a production unit 150 configured to create functional markings 360 on transparent articles 201, wherein said laser device 170 is programmed to selectively ablate material from the transparent article 201 according to beam parameters specified in a product database 410, and is controlled by a computerized production control system 101 including a program code 412 that is operated by a control unit 450 to select the layers 351 for processing, based on the desired functional markings 360 to be created, and manage the process of laser ablation using the selected layers 351 and beam parameter sets 380.

In an embodiment of the disclosure, there is provided at least one laser device 170 of a production unit 150 configured to perform laser ablation on transparent articles 201, wherein said laser device 170 is programmed to selectively ablate material from the transparent article 201 according to beam parameters specified in a product database 410, and is controlled by a computerized production control system 101 including a program code 412 that is operated by a control unit 450 to monitor and adjust the laser ablation process in real-time using sensors and feedback mechanisms, to ensure the quality and consistency of the functional markings 360 on the transparent articles 201.

The production unit 150 according to the present invention, may be configured to grow opaque or translucent layers on the transparent article 201 using plasma welding with plasma formed by the laser beam from as surface 280 that is behind and in contact with the transparent article 201 such that the laser beam is selected such that it is absorbed by said surface and said article 201 is transparent for said beam.

In the following some examples will be provided. It is set forth that any combination of the following examples falls within the scope of the present invention, even when not explicitly combined in the section where the embodiment is disclosed.

In accordance with a first example, there is provided a production unit 150 for fabricating electromagnetically functional markings 360 on transparent articles 201, comprising at least one laser device 170 configured to emit a laser beam at a wavelength to which the transparent articles 201 are transparent, and a computerized production control system 101, configured for mapping layered products 350 on transparent articles 201, wherein said system 101 is configured for nesting the layers of a layered product 350 on a transparent article 201, **characterized in that**, the system 101 comprises a product database 410 configured to be interfaced with a control unit 450 and configured, by programmed operations of the control unit 450, for storing and retrieving layers 351 comprising paired entries of digital traces 361, digital surfaces 362, beam parameter sets 380; and a program code 412, operated by said control unit 450, and is programmed to: select the layers 351 to be nested on a surface of a transparent article 201 for fabricating a coating 210 comprising a layered product 350 with said at least one laser device 170, and nest said layers 351 within constrained nesting regions 478, and perform variable selection of members of a set 352 of said layers 351 within said nesting regions 478 as a function of coordinate inputs 480, wherein said coordinate inputs 480 are scaled by said program code 412 in at least one dimension on the basis of said nesting.

In accordance with another example, the nested layers 351 may be configured to be scaled in at least a first dimension by said program code 412, wherein said first dimension is scaled by means of variable selection of the members of said set of said layers 351, wherein the members of said set 352 of said layers 351 is a function of a selection of a layered product 350.

In accordance with another example, the nested layers 351 may be configured to be scaled in at least two dimensions by said program code 412, wherein first of the dimensions is scaled by means of variable selection of the members of said set of said layers 351, wherein said set of said layers 351 is a function of a selection of a layered product 350 and a second dimension is scaled on the basis of said coordinate inputs 480.

In accordance with another example, the program code 412 may configured to enable nesting of at least one member of said layers 351 on a surface 280 that is behind and in contact with the transparent article 201 for plasma treatment of said article 201 with said at least one laser device 170 for welding an electromagnetically functional marking 360 on said article 201 with plasma formed from said surface 280, wherein at least one selectable beam parameter set 380 is configured for forming plasma from said surface 280 to form said marking 360, wherein said functional marking 360 is electrically conductive or opaque, reflective or translucent at a UV wavelength.

In accordance with another example, at least one of the paired entries may comprise a beam parameter set 380 that is paired to mark a layer that comprises carbon nanotube fillers on the surface of said transparent article 201 with a digital trace 361 or a digital surface 362 by said control unit 450 by marking an electromagnetically functional marking 360 on a surface between the layer of carbon nanotube fillers and said transparent article 201 by means of selective scribing, wherein said carbon nanotube fillers are comprised by said coating 210, and the wavelength of said laser beam is selected such that it is absorbed by said layer.

In accordance with another example, the means for selecting layers 351 to be nested on the coating 210 of a transparent article 201 for fabricating a layered product 350 on said article 201 may comprise means for selecting nesting regions 478 to be assigned within an area delimited with said geometrical inputs 475, wherein: said nesting regions 478 are configured to be selected on the basis of widgets 479 of a user interface 420;said nesting regions 478 are configured to be filled with members of said set of said layers 351 by said system 101; said coordinate inputs 480 are scaled in two dimensions on the basis of the filling of said nesting regions 478.

In accordance with another example, the variable selection may be synchronized with the programmed routing 500 of said layers 351, and a first dimension of said selection is scaled as a function of said routing 500 via the scaled coordinate inputs 480, wherein said set of said layers 351 is a function of a selection of a layered product 350.

In accordance with another example, the system 101 may be configured to receive the geometrical inputs of the transparent article 201 for the production unit 150: for automated adjustment of the focus of said at least one laser device 170 of the unit 150 on the coating 210 of said article 201 and maintaining said focus, and; for mapping the layered product 350 on the coating 210 of said article 201 upon delivery of said article 201 for fabricating the layered product 350 on said coating 210 with said unit 150.

In accordance with another example, the program code 412 may be programmed to sort a production series that comprises a production queue that defines a heterogeneous series of layered products 350 such that a set of these comprise a first nesting region 478 with first nestings, and another set comprises a combination of at least two such layered products, wherein the nestings are selected to form a different bandpass functionality.

In accordance with another example, the another set of layered products 350 may comprise a combination of at least two nesting regions 478 that are provided with at least two widgets 479, wherein the nestings have a different bandpass functionality and are selected to form a single coating.

In accordance with another example, the another set of layered products 350 may comprise a combination of at least two nesting regions 478 that are provided with at least two widgets 479, wherein the nestings have a different bandpass functionality and are selected to form a single nesting region 478.

In accordance with another example, the system 101 may be configured to receive instructions to provide bandstop functionality to at least one of a first bandpass, a second bandpass, and a third bandpass, wherein said first bandpass comprises part of the frequencies between 600-960 MHz, said second bandpass comprises part of the frequencies between 1500-6000 MHz, and said third bandpass comprises part of the frequencies above 12 GHz, and wherein there exists at least one combination of one of those frequencies, wherein said combination is provided with at least two heterogeneous nesting regions or a combination of one of those and the surface modulation of the nesting region 478 by means of the digital surface 362, and wherein the bandpass is provided with less than 9 dB line-of-sight attenuation and the bandstop is provided with more than 9 dB line-of-sight attenuation.

In accordance with another example, the set 352 of said layers 351 may be a function of a selection of a layered product 350, and said program code 412 may be programmed to receive instructions for marking a first nesting region 478 that comprises a plurality of nested layers 351 with a bandstop at a first or third frequency range, and a second nesting region 478 that comprises a combination of at least two such plurality of nested layers 351, wherein said combination has a different bandpass functionality than said first nesting region 478.

In accordance with another example, the set 352 of said layers 351 may be a function of a selection of a layered product 350, and said program code 412 may be programmed to receive instructions for marking a first nesting region 478 that comprises a plurality of nested layers 351 with a bandpass at a first or second frequency range, and a second nesting region 478 with a bandpass at a first or second frequency range, and to merge the first and the second nesting region during the processing of the coating such that the merging forms a wider bandpass functionality than that of the bandpass functionalities of isolated markings of the selected layers 351.

In accordance with another example, the plurality of nested layers within said first nesting region 478 and said combination of nested layers within said second nesting region 478 may be scaled in at least one dimension on the basis of said nesting.

In accordance with another example, the program code 412 may be programmed to receive instructions of fabricating a layered product 350 comprising at least one nesting region 478 with bird-friendly layers 351 that are formed by pairing at least one digital surface 362 with at least one beam parameter set 380.

In accordance with another example, the program code 412 may be programmed to receive instructions of fabricating a bird-friendly layered product 350, comprising at least one nesting region 478 with bird-friendly layers 351, wherein said bird-friendly layers 351 are formed by pairing at least one digital surface 362 with at least one beam parameter set 380, and said nesting region 478 has a spectral reflectance modulation in the range of about 200-1100 nm to form visible markings to the human eye and to birds.

In accordance with another example, the system 101 may comprise at least one laser device 170 operable to treat the coating 210 through the glass 230 of the article 201 without compromising the integrity of the glass 230.

In accordance with another example, the laser device 170 is operable to generate a laser beam 171 having a wavelength in the range of about 800-2000 nm.

In accordance with another example, the laser device 170 may be operable to generate a laser beam 171 having a wavelength in the range of about 800-12000 nm.

In accordance with another example, the digital surface 362 may comprise a pattern of dots or lines that is scaled to a size that is visible to birds.

In accordance with another example, the program code 412 may be programmed to select said beam parameter set 380 for the laser device 170 based on the optical properties of the coating 210 and the glass 230 of the article 201 to maintain the integrity of the glass 230.

In accordance with another example, the program code 412 may be programmed to select said digital surface 362 based on its spectral reflectance modulation to form visible markings to the human eye and to birds.

In accordance with another example, the program code 412 may be programmed to generate a bird-friendly layered product 350 comprising a plurality of nesting regions 478 with bird-friendly layers 351, wherein said nesting regions 478 have different spectral reflectance modulations to provide different bird-friendly markings.

In accordance with another example, the program code 412 may be configured to select a digital surface 362 for the bird-friendly layers 351 with a hatch pattern, wherein said hatch pattern comprises a plurality of intersecting lines or crosshatching.

In accordance with another example, the program code 412 may be configured to select a beam parameter set 380 representative of laser radiation having a wavelength between 800 and 2000 nm, and wherein said laser radiation is configured to mark visible regions within the digital surface 362, wherein the pulse energy of said laser radiation remains below the ablation threshold of the coating 210 to form the bird-friendly layers 351.

In the following, disclosure of alternative embodiments of the invention are provided. It is set forth that any combination of the following examples falls within the scope of the present invention, even when not explicitly combined in the section where the embodiment is disclosed.

In accordance with an alternative example, there is provided a method for fabricating functional markings 360 on transparent articles 201, **comprising** the steps of:
- using a production unit 150 interfaced with a computerized production control system 101 that is configured for mapping layered products 350 on transparent articles 201 in a fabrication of varying article sizes of the transparent articles 201;
- using said unit 150 with an interface to a product database 410 comprising paired entries of digital traces 361, digital surfaces 362, and beam parameter sets 380;
- selecting layers 351 to be nested on a coating 210 of a transparent article 201 for fabricating a layered product 350 on said article 201, and nesting said layers 351 within constrained nesting regions 478;
- scaling said nested layers 351 in at least one dimension by means of variable selection of the members of a set 352 of said layers 351, wherein said set 352 of said layers 351 is a function of a selection of a layered product 350;
- fabricating said functional markings 360 on said transparent articles 201 by means of said production unit 150.

In accordance with an example, the method may comprise a step of using said nested layers 351 such that said layers are scaled in at least a first dimension by means of variable selection of the members of said set of said layers 351, wherein said first dimension is scaled by means of variable selection of the members of said set of said layers 351, wherein said set 352 of said layers 351 is a function of a selection of a layered product 350.

In accordance with an example, the method may comprise a step of using said nested layers 351 such that said layers are scaled in at least two dimensions, wherein first of the dimensions is scaled by means of variable selection of the members of said set of said layers 351, wherein said set of said layers 351 is a function of a selection of a layered product 350 and a second dimension is scaled on the basis of said nesting.

In accordance with an example, the method may comprise a step of selecting nesting regions 478 to be assigned within an area delimited with said geometrical inputs 475, wherein:
- said nesting regions 478 are configured to be selected on the basis of widgets 479 of a user interface 420;
- said nesting regions 478 are configured to be filled with members of said set of said layers 351 by said system 101;
- said coordinate inputs 480 are scaled in two dimensions on the basis of the filling of said nesting regions 478.

In accordance with an example, in said method, said variable selection may be synchronized with the programmed routing 500 of said layers 351, and a first dimension of said selection is scaled as a function of said routing 500 via the scaled coordinate inputs 480, wherein said set of said layers 351 is a function of a selection of a layered product 350.

In the following, disclosure of other alternative embodiments of the invention are provided. It is set forth that any combination of the following examples falls within the scope of the present invention, even when not explicitly combined in the section where the embodiment is disclosed.

In accordance with an alternative example, there is provided a method for fabricating functional markings 360 on transparent articles 201, **comprising** the steps of:
- providing a production unit 150 as claimed in any of claims 1-23;
- providing an article 201 comprising a coating 210;
- providing a layered product 350 comprising a plurality of layers 351;
- selecting layers 351 for said layered product 350 to be nested on the coating 210 of said article 201 by means of said program code 412;
- nesting said selected layers 351 within constrained nesting regions 478 by means of said program code 412;
- providing laser radiation to treat said coating 210 of said article 201 through said glass 230 of said article 201 by means of said laser device 170 to form said functional markings 360 in said coating 210;
   and,
- repeating said steps of selecting, nesting and providing laser radiation to fabricate a series of said functional markings 360 on transparent articles 201 in a fabrication of varying article sizes of the transparent articles 201.

In accordance with an example, in said method, said selecting layers 351 step may comprise the steps of:
- providing a layered product 350 comprising a plurality of layers 351;
- selecting a set 352 of said layers 351 for nesting on the coating 210 of said article 201, wherein said set 352 is a function of a selection of said layered product 350;
- scaling said set 352 of said layers 351 within said nesting regions 478 as a function of said program code 412, wherein said scaling is a function of a coordinate input 480, and;
- synchronizing said selecting layers 351 step with a programmed routing 500 of said layers 351, wherein said routing 500 is a function of said scaled coordinate input 480.

In accordance with an example, in said method, said nesting and providing laser radiation steps may be synchronized.

In accordance with an example, in said method, said providing laser radiation step may be performed by selecting a beam parameter set 380 for said laser device 170 based on the optical properties of the coating 210 and the glass 230 of said article 201 to maintain the integrity of said glass 230.

In accordance with an example, in said method, said providing laser radiation step may comprise marking visible regions within said digital surface 362, wherein the pulse energy of said laser radiation remains below the ablation threshold of said coating 210.

In accordance with an example, in said method, said selecting layers 351 step may comprise selecting layers 351 of bird-friendly layers 351 for nesting on the coating 210 of said article 201.

In accordance with an example, in said method, said bird-friendly layers 351 may be formed by pairing at least one digital surface 362 with at least one beam parameter set 380.

In accordance with an example, in said method, said nesting regions 478 may comprise heterogeneous spectral reflectance modulations to provide different bird-friendly markings.

In accordance with an example, in said method, said digital surface 362 may comprise a pattern of dots or lines that is scaled to a size that is visible to birds.

In accordance with an example, in said method, said providing laser radiation step may be performed by providing laser radiation having a wavelength in the range of about 800-2000 nm and wherein said laser radiation is configured to mark visible regions within the digital surface, wherein the pulse energy of said laser radiation remains below the ablation threshold of the coating to form the bird-friendly layers.

In the following, disclosure of other alternative embodiments of the invention are provided. It is set forth that any combination of the following examples falls within the scope of the present invention, even when not explicitly combined in the section where the embodiment is disclosed.

In accordance with an example, there is provided a transparent article 201 **comprising** a coating 210 having functional markings 360 formed by the method according to any of the examples of the preceding method.

In accordance with an example, said functional markings 360 may comprise bird-friendly markings.

In accordance with an example, said bird-friendly markings may be formed by said nesting regions 478 having different spectral reflectance modulations.

In accordance with an example, said bird-friendly markings may comprise a pattern of dots or lines that is scaled to a size that is visible to birds.

In accordance with an example, said coating 210 may comprise a low-emissivity coating.

In accordance with an example, said coating 210 may comprise carbon nanotube fillers.

In accordance with an example, said functional markings 360 may be formed by said laser radiation having a wavelength in the range of about 800-2000 nm.

In accordance with an example, said functional markings 360 may formed by said laser radiation having a pulse energy that remains below the ablation threshold of said coating 210 to maintain the integrity of said glass 230.

In accordance with an example, said functional markings 360 may comprise visible regions within said digital surface 362.

In accordance with an example, there is provided the transparent article 201 having functional markings 360 formed by the method of any of proceeding examples, **wherein** said functional markings 360 comprise at least one bandpass frequency in the range of 600-960 MHz.

In accordance with an example, said functional markings 360 may comprise a first bandpass frequency in the range of 600-960 MHz.

In accordance with an example, said functional markings 360 may comprise a second bandpass frequency in the range of 1700-6000 MHz.

In accordance with an example, said functional markings 360 may comprise a third bandpass frequency in the range above 12 GHz.

In accordance with an example, said functional markings 360 may comprise a pattern of dots or lines that is scaled to a size that is visible to birds.

In accordance with an example, said functional markings 360 may comprise bird-friendly layers 351 formed by pairing at least one digital surface 362 with at least one beam parameter set 380.

In accordance with an example, said bird-friendly layers 351 may comprise heterogeneous spectral reflectance modulations between said layers to provide bird-friendly markings with heterogeneous reflection coefficient at a UV wavelength.

In accordance with an example, said functional markings 360 may be arranged in a pattern that is detectable by a reader device 190.

In accordance with an example, said reader device 190 may be configured to read said functional markings 360 using radio frequency identification RFID technology.

## Claims

1. A production unit (150) for fabricating electromagnetically functional markings (360) on transparent articles (201), comprising at least one laser device (170) configured to emit a laser beam at a wavelength to which the transparent articles (201) are transparent, and a computerized production control system (101), configured for mapping layered products (350) on transparent articles (201), wherein said system (101) is configured for nesting the layers of a layered product (350) on a transparent article (201), **characterized in that**, the system (101) comprises:
- a product database (410) configured to be interfaced with a control unit (450) for storing and retrieving information of layers (351) comprising paired entries of:
- digital traces (361);
- digital surfaces (362);
- beam parameter sets (380);
and;
- a program code (412), when operated by said control unit (450), is programmed to cause the production unit (150) at least to:
- store information of layers (351) to the database;
- retrieve information of layers (351) from the database;
- select layers (351) to be nested on a surface of the transparent article (201) for fabricating a coating (210) on the layered product (350) with said at least one laser device (170), and;
- nest said layers (351) within constrained nesting regions (478), and;
- perform variable selection of members of a set (352) of said layers (351) within said nesting regions (478) as a function of coordinate inputs (480),
wherein said program code (412), when operated by said control unit (450), is further programmed to cause the production unit (150) at least to scale said coordinate inputs (480) in at least one dimension on the basis of said nesting.

2. The production unit (150) according to claim 1, **characterized in that**, said nested layers (351) are configured to be scaled in at least a first dimension by said program code (412), wherein said first dimension is scaled by means of variable selection of the members of said set of said layers (351), wherein the members of said set (352) of said layers (351) is a function of a selection of a layered product (350), or said nested layers (351) are configured to be scaled in at least two dimensions by said program code (412), wherein first of the dimensions is scaled by means of variable selection of the members of said set of said layers (351), wherein said set of said layers (351) is a function of a selection of a layered product (350) and a second dimension is scaled on the basis of said coordinate inputs (480).

3. The production unit (150) according to any of claims 1-2, **characterized in that,** said program code (412), when operated by said control unit (450), is further programmed to cause the production unit (150) to enable nesting of at least one member of said layers (351) on a surface (280) that is behind and in contact with the transparent article (201) for plasma treatment of said article (201) with said at least one laser device (170) for welding an electromagnetically functional marking (360) on said article (201) with plasma formed from said surface (280), wherein at least one selectable beam parameter set (380) is configured for causing forming plasma from said surface (280) to form said marking (360), wherein said functional marking (360) is electrically conductive or opaque, reflective or translucent at a UV wavelength.

4. The production unit (150) according to any of claims 1-3, **characterized in that,** at least one of the paired entries comprises a beam parameter set (380) that is paired to mark a layer that comprises carbon nanotube fillers on the surface of said transparent article (201) with a digital trace (361) or a digital surface (362) by said control unit (450) by marking an electromagnetically functional marking (360) on a surface between the layer of carbon nanotube fillers and said transparent article (201) by means of selective scribing, wherein said carbon nanotube fillers are comprised by said coating (210), and the wavelength of said laser beam is selected such that it is absorbed by said layer.

5. The production unit (150) according to any of claims 1-4, **characterized in that,** said means for selecting layers (351) to be nested on the coating (210) of a transparent article (201) for fabricating a layered product (350) on said article (201) comprises means for selecting nesting regions (478) to be assigned within an area delimited with said geometrical inputs (475), wherein:
- said nesting regions (478) are configured to be selected on the basis of widgets (479) of a user interface (420);
- said nesting regions (478) are configured to be filled with members of said set of said layers (351) by said system (101);
- said coordinate inputs (480) are scaled in two dimensions on the basis of the filling of said nesting regions (478).

6. The production unit (150) according to any of claims 1-5, **characterized in that,** said variable selection is synchronized with the programmed routing (500) of said layers (351), and a first dimension of said selection is scaled as a function of said routing (500) via the scaled coordinate inputs (480), wherein said set of said layers (351) is a function of a selection of a layered product (350).

7. The production unit (150) according to any of the claims 1-6, **characterized in that,** said system (101) is configured to receive instructions to provide bandstop functionality to at least one of a first bandpass, a second bandpass, and a third bandpass, wherein said first bandpass comprises part of the frequencies between 600-960 MHz, said second bandpass comprises part of the frequencies between 1500-6000 MHz, and said third bandpass comprises part of the frequencies above 12 GHz, and wherein there exists at least one combination of one of those frequencies, wherein said combination is provided with at least two heterogeneous nesting regions or a combination of one of those and the surface modulation of the nesting region (478) by means of the digital surface (362), and wherein the bandpass is provided with less than 9 dB line-of-sight attenuation and the bandstop is provided with more than 9 dB line-of-sight attenuation.

8. The production unit (150) according to any of the claims 1-7, **characterized in that,** said set (352) of said layers (351) is a function of a selection of a layered product (350), and said program code (412) is programmed to receive instructions for marking a first nesting region (478) that comprises a plurality of nested layers (351) with a bandstop at a first or third frequency range, and a second nesting region (478) that comprises a combination of at least two such plurality of nested layers (351), wherein said combination has a different bandpass functionality than said first nesting region (478).

9. The production unit (150) according to any of the claims 1-7, **characterized in that,** said set (352) of said layers (351) is a function of a selection of a layered product (350), and said program code (412) is programmed to receive instructions for marking a first nesting region (478) that comprises a plurality of nested layers (351) with a bandpass at a first or second frequency range, and a second nesting region (478) with a bandpass at a first or second frequency range, and to merge the first and the second nesting region during the processing of the coating such that the merging forms a wider bandpass functionality than that of the bandpass functionalities of isolated markings of the selected layers (351).

10. The production unit (150) according claim 8 or 9, **characterized in that**, the plurality of nested layers within said first nesting region (478) and said combination of nested layers within said second nesting region (478) are scaled in at least one dimension on the basis of said nesting.

11. The production unit (150) according to any of claims 1-10, **characterized in that,** said program code (412) is programmed to receive instructions of fabricating a bird-friendly layered product (350), comprising at least one nesting region (478) with bird-friendly layers (351), wherein said bird-friendly layers (351) are formed by pairing at least one digital surface (362) with at least one beam parameter set (380), and said nesting region (478) has a spectral reflectance modulation in the range of about 200-1100 nm to form visible markings to the human eye and to birds.

12. The production unit (150) according to the claim 11, **characterized in that**, said digital surface (362) comprises a pattern of dots or lines that is scaled to a size that is visible to birds.

13. The production unit (150) according to any of claims 11-12, **characterized in that,** said program code (412) is programmed to select said digital surface (362) based on its spectral reflectance modulation to form visible markings to the human eye and to birds.

14. The production unit (150) according to any of claims 11-13, **characterized in that** the program code (412) is configured to select a digital surface (362) for the bird-friendly layers (351) with a hatch pattern, wherein said hatch pattern comprises a plurality of intersecting lines or crosshatching.

15. The production unit (150) according to any of claims 11-14, **characterized in that** the program code (412) is configured to select a beam parameter set (380) representative of laser radiation having a wavelength between 800 and 2000 nm, and wherein said laser radiation is configured to mark visible regions within the digital surface (362), wherein the pulse energy of said laser radiation remains below the ablation threshold of the coating (210) to form the bird-friendly layers (351).
